(19) Europäisches Patentamt
European Patent Office
Office européen des brevets

(11) **EP 4 611 367 A1**

(12) **EUROPEAN PATENT APPLICATION**

(43) Date of publication:
**03.09.2025 Bulletin 2025/36**

(21) Application number: **24305315.4**

(22) Date of filing: **29.02.2024**

(51) International Patent Classification (IPC):
**H04N 19/117** *(2014.01)* **H04N 19/176** *(2014.01)*
**H04N 19/80** *(2014.01)* **H04N 19/85** *(2014.01)*

(52) Cooperative Patent Classification (CPC):
**H04N 19/85; H04N 19/117; H04N 19/176;
H04N 19/80**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
• **LEFEBVRE, Frederic**
**35000 RENNES (FR)**

• **URBAN, Fabrice**
**35235 THORIGNE-FOUILLARD (FR)**
• **RADOSAVLJEVIC, Milos**
**35000 RENNES (FR)**
• **DE LAGRANGE, Philippe**
**35830 BETTON (FR)**
• **NASER, Karam**
**35250 MOUAZE (FR)**

(74) Representative: **Interdigital**
**Immeuble ZEN 2**
**845 A, avenue des Champs Blancs**
**35510 Cesson-Sévigné (FR)**

(54) **FILM GRAIN MODELING USING ENCODING INFORMATION**

(57) A method and an apparatus for determining film grain parameters in a video are provided wherein at least one image of the video is encoded and film grain parameters of a frequency-based model are determined using one or more encoding parameters of the at least one image. The film grain parameters are determined by selecting one or more blocks of the at least one image, assigning each one of the selected one or more blocks to an intensity interval obtained from a subdivision of an intensity range of the at least one image, determining a high horizontal cut-off frequency and a high vertical cut-off frequency for the intensity interval, determining a low horizontal cut-off frequency and a low vertical cut-off frequency for the intensity interval, and determining a scaling factor. At least one of the above uses one or more encoding parameters of the at least one image.

FIG. 10

**Description**

TECHNICAL FIELD

The present embodiments generally relate to video compression, distribution and rendering, and more particularly to film grain modeling. The present embodiments relate to a method and an apparatus for determining film grain model parameters.

BACKGROUND

To achieve high compression efficiency, image and video coding schemes usually employ prediction and transform to leverage spatial and temporal redundancy in the video content. Generally, intra or inter prediction is used to exploit the intra or inter picture correlation, then the differences between the original block and the predicted block, often denoted as prediction errors or prediction residuals, are transformed, quantized, and entropy coded. In inter prediction, motion vectors used in motion compensation are often predicted from motion vector predictor. To reconstruct the video, the compressed data are decoded by inverse processes corresponding to the entropy coding, quantization, transform, and prediction.

Film grain is a specific type of noise which appears in video which is very pleasant and very distinctive. In its essence, film grain is a result of physical processes of analog film stock exposure and development. Originally a noise due to the process of photography, the so-called film grain, consists in a sensor noise, naturally present and unique for each analog camera. With the era of digital cameras, this sensor noise has disappeared at the capture stage but is now added afterwards to the content to recreate a movie look. The random nature of this noise makes it difficult to compress using traditional coding tools. The common parameters of the encoding tools, such as those chosen for low bit rates, often remove film grain. High bitrates are required to keep and reconstruct film grain with sufficient quality, which is contrary to the encoding/decoding goal of saving bits while encoding content. To overcome this encoder filtering issue, usually, film grain modeling is performed before the encoding stage and the film grain is added back to the reconstructed video using the model of the film grain, during a so-called synthesis step, at the decoding stage.

SUMMARY

According to an aspect, a method for determining film grain model parameters is provided. The method comprises encoding at least one image of a video and determining at least one film grain parameter of a frequency-based film grain model using at least one part of one or more encoding parameters of the at least one image.

According to another aspect, an apparatus for determining film grain model parameters is provided. The apparatus comprises one or more processors operable to encode at least one image of a video and determine at least one film grain parameter of a frequency-based film grain model using at least one part of one or more encoding parameters of the at least one image.

In an embodiment, the at least one film grain parameter of the frequency-based film grain model comprises at least one of: a low horizontal cut-off frequency, a high horizontal cut-off frequency, a low vertical cut-off frequency, a high vertical cut-off frequency, a variance of the film grain, a scaling factor value.

In another embodiment, determining, for the at least one image, at least one film grain parameter comprises selecting one or more blocks of the at least one image and the following steps, wherein at least one of them uses one or more parameters of the encoding of the at least one image: assigning each one of the selected one or more blocks to an intensity interval obtained from a subdivision of an intensity range of the at least one image, determining a high horizontal cut-off frequency and a high vertical cut-off frequency for the intensity interval, determining a low horizontal cut-off frequency and a low vertical cut-off frequency for the intensity interval, determining a scaling factor.

Further embodiments that can be used alone or in combination are described herein.

One or more embodiments also provide a computer program comprising instructions which when executed by one or more processors cause the one or more processors to perform any one of the methods for determining film grain model parameters according to any of the embodiments described herein. One or more of the present embodiments also provide a non-transitory computer readable medium and/or a computer readable storage medium having stored thereon instructions for determining film grain model paramaters according to the methods described herein.

One or more embodiments also provide a computer readable storage medium having stored thereon a bitstream generated according to the methods described herein. One or more embodiments also provide a method and apparatus for transmitting or receiving the bitstream generated according to the methods described above.

BRIEF DESCRIPTION OF THE DRAWINGS

FIG. 1A illustrates a block diagram of a system within which aspects of the present embodiments may be implemented according to an embodiment.

FIG. 1B illustrates a block diagram of a system within which aspects of the present embodiments may be implemented according to another embodiment.

FIG. 1C illustrates a block diagram of a system within which aspects of the present embodiments may be implemented according to another embodiment.

FIG. 2 illustrates a block diagram of an embodiment of a video encoder within which aspects of the present embodiments may be implemented.

FIG. 3 illustrates a block diagram of an embodiment of a video decoder within which aspects of the present embodiments may be implemented.

FIG. 4 illustrates examples of block partitioning.

FIG. 5 illustrates an example of a film grain analysis workflow.

FIG. 6 illustrates an example of a film grain synthesis workflow.

FIG. 7 illustrates another example of a film grain analysis workflow.

FIG. 8 illustrates an example of a film grain representation in the frequency domain.

FIG. 9 illustrates an example of variation of grain standard deviation versus Y intentisity.

FIG. 10 illustrates an example of a method for encoding a video with film grain parameters and a method for decoding a video with film grain parameters according to an embodiment.

FIG. 11 illustrates an example of deriving information for determining film grain parameters according to a first embodiment.

FIG. 12 illustrates an example of a method for determining film grain parameters according to an embodiment.

FIG. 13 illustrates another example of a method for determining film grain parameters according to an embodiment.

FIG. 14 illustrates an example of a block with residual value at (0,0) and reference samples from adjacents blocks.

FIG. 15 illustrates an example of a scaling function represented as a look-up table of scaling factors.

FIG. 16 illustrates an example of deriving information for determining film grain parameters according to a second embodiment.

FIG. 17 shows two remote devices communicating over a communication network in accordance with an example of the present principles.

FIG. 18 shows the syntax of a signal in accordance with an example of the present principles.

DETAILED DESCRIPTION

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

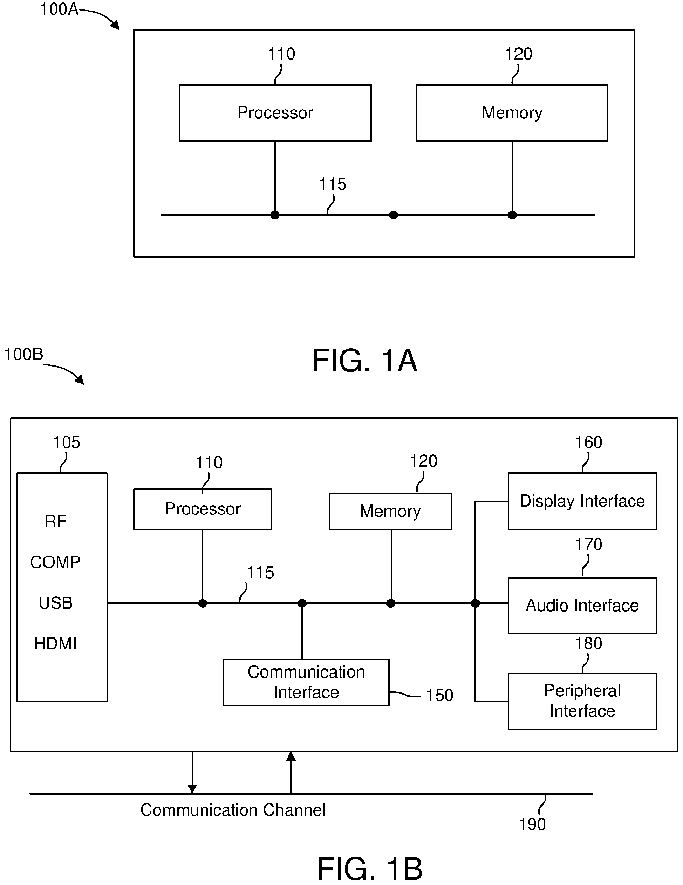

The aspects described and contemplated in this application can be implemented in many different forms. FIGs. 1A, 1B, 1C, 2 and 3 below provide some embodiments, but other embodiments are contemplated and the discussion of FIGs. 1A, 1B, 1C, 2 and 3 does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "pixel" and "sample" may be used interchangeably, the terms "image," "picture" and "frame" may be used interchangeably.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

The present aspects are not limited to VVC or HEVC, and can be applied, for example, to other standards and recommendations, whether pre-existing or future-developed, and extensions of any such standards and recommendations (including VVC and HEVC). Unless indicated otherwise, or technically precluded, the aspects described in this application can be used individually or in combination.

FIG. 1A-1C illustrates block diagrams of examples of systems in which various aspects and embodiments can be implemented. Any one of the systems 100A, 100B or 100B may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. In various embodiments, the system 100A, 100B or 100C is communicatively coupled to other systems, or to other electronic devices, via, for example, a communications bus or through dedicated input and/or output ports. In various embodiments, the system 100A, 100B or 100C is configured to implement one or more of the aspects described in this application.

FIG. 1A illustrates a block diagram of an example of a system in which various aspects and embodiments can be implemented. The system 100A includes at least one processor 110 configured to execute instructions loaded therein for implementing, for example, the various aspects described in this application. Processor 110 may include embedded memory, input output interface, and various other circuitries as known in the art. The system 100A includes at least one memory 120, e.g., a volatile memory device, and/or a non-volatile memory device, including, but not limited to, EEPROM, ROM, PROM, RAM, DRAM, SRAM, flash, magnetic disk drive, and/or optical disk drive. The memory 120 may include an internal storage device, an attached storage device, and/or a network accessible storage device, as non-limiting examples. The processor 110 may be interconnected to the memory 120 by an interconnection bus 115.

Program code to be loaded onto processor 110 to perform the various aspects described in this application is subsequently loaded onto memory 120 for execution by processor 110.

In some embodiments, memory inside of the processor 110 is used to store program code instructions and to provide working memory for processing that is needed during encoding or decoding. The input to the elements of system 100A may be provided through various input devices (not represented). Both Processor 110 and memory 120 can also have one or more additional interconnections to external connections.

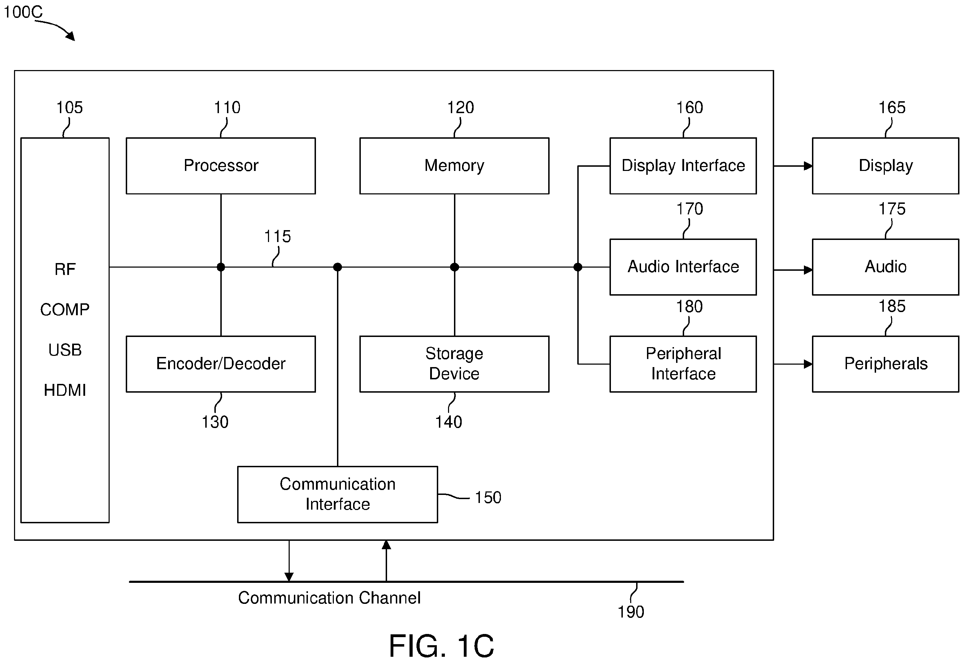

FIG. 1B illustrates a block diagram of an example of a system 100B in which various aspects and embodiments can be implemented. The system 100B includes the processor 110 and memory 120 as described in relation with FIG. 1A. The input to the elements of system 100B may be provided through various input devices as indicated in block 105 which is described further below with FIG. 1C. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1B, include composite video.

The various elements may be interconnected and transmit data therebetween using suitable connection arrangement 115, for example, an internal bus as known in the art, including the I2C bus, wiring, and printed circuit boards.

The system 100B includes communication interface 150 that enables communication with other devices via communication channel 190. The communication interface 150 may include, but is not limited to, a transceiver configured to transmit and to receive data over communication channel 190. The communication interface 150 may include, but is not limited to, a modem or network card and the communication channel 190 may be implemented, for example, within a wired and/or a wireless medium.

The system 100B may provide an output signal to various output devices, including a display, speakers, and other peripheral devices. The output devices may be communicatively coupled to system 100B via dedicated connections through respective interfaces 160, 170, and 180. Alternatively, the output devices may be connected to system 100B using the communications channel 190 via the communications interface 150.

FIG. 1C illustrates a block diagram of an example of a system 100C in which various aspects and embodiments can be implemented according to another embodiment. Elements of system 100C, singly or in combination, may be embodied in a single integrated circuit, multiple Ics, and/or discrete components. For example, in at least one embodiment, the processing and encoder/decoder elements of system 100C are distributed across multiple Ics and/or discrete components.

The system 100C includes the processor 110 and memory 120 as described in relation with FIG. 1A or 1B.

System 100C includes a storage device 140, which may include non-volatile memory and/or volatile memory, including, but not limited to, EEPROM, ROM, PROM, RAM, DRAM, SRAM, flash, magnetic disk drive, and/or optical disk drive. The storage device 140 may include an internal storage device, an attached storage device, and/or a network accessible storage device, as non-limiting examples.

System 100C includes an encoder/decoder module 130 configured, for example, to process data to provide an encoded video or decoded video, and the encoder/decoder module 130 may include its own processor and memory. The encoder/decoder module 130 represents module(s) that may be included in a device to perform the encoding and/or decoding functions. As is known, a device may include one or both of the encoding and decoding modules. Additionally, encoder/decoder module 130 may be implemented as a separate element of system 100C or may be incorporated within processor 110 as a combination of hardware and software as known to those skilled in the art.

Program code to be loaded onto processor 110 or encoder/decoder 130 to perform the various aspects described in this application may be stored in storage device 140 and subsequently loaded onto memory 120 for execution by processor 110. In accordance with various embodiments, one or more of processor 110, memory 120, storage device 140, and encoder/decoder module 130 may store one or more of various items during the performance of the processes described in this application. Such stored items may include, but are not limited to, the input data (image, video, volumetric content), the decoded data (image, video, volumetric content) or portions of the decoded data, the bitstream, matrices, variables, and intermediate or final results from the processing of equations, formulas, operations, and operational logic.

In some embodiments, memory inside of the processor 110 and/or the encoder/decoder module 130 is used to store instructions and to provide working memory for processing that is needed during encoding or decoding. In other embodiments, however, a memory external to the processing device (for example, the processing device may be either the processor 110 or the encoder/decoder module 130) is used for one or more of these functions. The external memory may be the memory 120 and/or the storage device 140, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for data encoding and decoding operations, such as for MPEG-2, HEVC (HEVC refers to High Efficiency Video Coding, also known as H.265 and MPEG-H Part 2), or VVC (Versatile Video Coding also known as H.266, standard developed by JVET, the Joint Video Experts Team).

The input to the elements of system 100C may be provided through various input devices as indicated in block 105, also mentionned in FIG. 1B. Such input devices of system 100B or 100C include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1B or 1C, include composite video.

In various embodiments, the input devices of block 105 in system 100B or 100C have associated respective input processing elements as known in the art. For example, the RF portion may be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which can be referred to as a channel in certain embodiments, (iv) demodulating the down converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements may include inserting elements in between existing elements, for example, inserting amplifiers and an analogto-digital converter. In various embodiments, the RF portion includes an antenna.

Additionally, the USB and/or HDMI terminals may include respective interface processors for connecting system 100B or 100C to other electronic devices across USB and/or HDMI connections. It is to be understood that various aspects of input processing, for example, Reed-Solomon error correction, may be implemented, for example, within a separate input processing IC or within processor 110 as necessary. Similarly, aspects of USB or HDMI interface processing may be implemented within separate interface ICs or within processor 110 as necessary. The demodulated, error corrected, and demultiplexed stream is provided to various processing elements, including, for example, processor 110, and encoder/-decoder 130 operating in combination with the memory and storage elements to process the data stream as necessary for presentation on an output device.

Various elements of the systems 100A, 100B or 100C may be provided within an integrated housing, Within the integrated housing, the various elements may be interconnected and transmit data therebetween using the suitable connection arrangement 115, for example, an internal bus as known in the art, including the I2C bus, wiring, and printed circuit boards.

Similarly as for the sytem 100B of FIG. 1B, the system 100C includes communication interface 150 that enables communication with other devices via communication channel 190. The communication interface 150 may include, but is not limited to, a transceiver configured to transmit and to receive data over communication channel 190. The communication interface 150 may include, but is not limited to, a modem or network card and the communication channel 190 may be implemented, for example, within a wired and/or a wireless medium.

Data is streamed to the system 100B or 100C, in various embodiments, using a Wi-Fi network such as IEEE 802.11 (IEEE refers to the Institute of Electrical and Electronics Engineers). The Wi-Fi signal of these embodiments is received over the communications channel 190 and the communications interface 150 which are adapted for Wi-Fi communications. The communications channel 190 of these embodiments is typically connected to an access point or router that provides access to outside networks including the Internet for allowing streaming applications and other over-the-top communications. Other embodiments provide streamed data to the system 100B or 100C using a set-top box that delivers the data over the HDMI connection of the input block 105. Still other embodiments provide streamed data to the system 100B or 100C using the RF connection of the input block 105. As indicated above, various embodiments provide data in a non-streaming manner. Additionally, various embodiments use wireless networks other than Wi-Fi, for example a cellular network or a Bluetooth network.

The system 100C may provide an output signal to various output devices, including a display 165, speakers 175, and other peripheral devices 185. The display 165 of various embodiments includes one or more of, for example, a touchscreen display, an organic light-emitting diode (OLED) display, a curved display, and/or a foldable display. The display 165 can be for a television, a tablet, a laptop, a cell phone (mobile phone), or other devices. The display 165 can also be integrated with other components (for example, as in a smart phone), or separate (for example, an external monitor for a laptop). The other peripheral devices 185 include, in various examples of embodiments, one or more of a stand-alone digital video disc (or digital versatile disc) (DVR, for both terms), a disk player, a stereo system, and/or a lighting system. Various embodiments use one or more peripheral devices 185 that provide a function based on the output of the system 100C. For example, a disk player performs the function of playing the output of the system 100C.

In various embodiments, control signals are communicated between the system 100C and the display 165, speakers 175, or other peripheral devices 185 using signaling such as AV.Link, CEC, or other communications protocols that enable device-to-device control with or without user intervention. The output devices may be communicatively coupled to system 100C via dedicated connections through respective interfaces 160, 170, and 180. Alternatively, the output devices may be connected to system 100C using the communications channel 190 via the communications interface 150. The display 165 and speakers 175 may be integrated in a single unit with the other components of system 100C in an electronic device, for example, a television. In various embodiments, the display interface 160 includes a display driver, for example, a timing controller (T Con) chip.

The display 165 and speaker 175 may alternatively be separate from one or more of the other components, for example, if the RF portion of input 105 is part of a separate set-top box. In various embodiments in which the display 165 and speakers 175 are external components, the output signal may be provided via dedicated output connections, including, for example, HDMI ports, USB ports, or COMP outputs.

In any of the systems 100A, 100B or 100C, the embodiments can be carried out by computer program product comprising code instructions that implements any one of embodiments described herein. The computer program product may be computer software implemented by the processor 110 or by hardware, or by a combination of hardware and software. As a non-limiting example, the embodiments can be implemented by one or more integrated circuits. The memory 120 of any one of the systems 100A, 100B or 100C can be of any type appropriate to the technical environment and can be implemented using any appropriate data storage technology, such as optical memory devices, magnetic memory devices, semiconductor-based memory devices, fixed memory, and removable memory, as non-limiting examples. The processor 110 of any one of the systems 100A, 100B or 100C can be of any type appropriate to the technical environment, and can encompass one or more of microprocessors, general purpose computers, special purpose computers, and processors based on a multi-core architecture, as non-limiting examples.

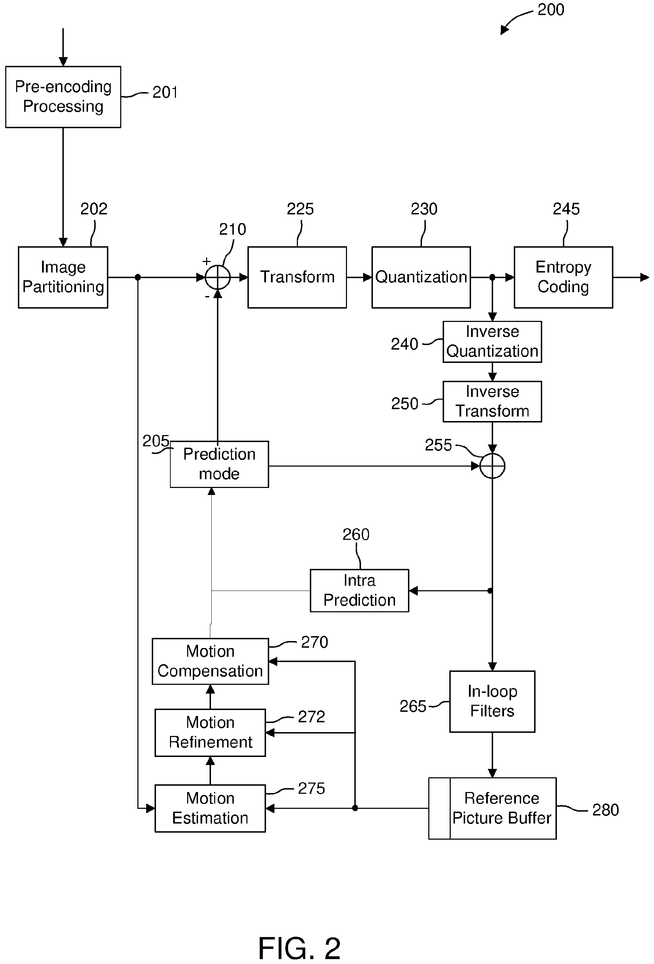

FIG. 2 illustrates an example of a block-based hybrid video encoder 200. Variations of this encoder 200 are contemplated, but the encoder 200 is described below for purposes of clarity without describing all expected variations.

In some embodiments, FIG. 2 also illustrate an encoder in which improvements are made to the HEVC standard or a VVC standard (*Versatile Video Coding, Standard ITU-T H.266, ISO/IEC 23090-3, 2020*) or an encoder employing technologies similar to HEVC or VVC, such as an encoder ECM (Enhanced Compression Model) under development by JVET (Joint Video Exploration Team).

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of color components), or re-sizing the picture (ex: down-scaling). Metadata can be associated with the pre-processing and attached to the bitstream.

In the encoder 200, a picture is encoded by the encoder elements as described below. The picture to be encoded is partitioned (202) and processed in units of, for example, CUs (Coding units) or blocks. In the disclosure, different expressions may be used to refer to such a unit or block resulting from a partitioning of the picture. Such wording may be coding unit or CU, coding block or CB, luminance CB, or block. A CTU (Coding Tree Unit) refers to a group of blocks or group of units or group of coding units (CUs). In some embodiments, a CTU may be considered as a block, or a unit as itself.

Each unit is encoded using, for example, either an intra or inter mode. When a unit is encoded in an intra mode, it performs intra prediction (260). In an inter mode, motion estimation (275) and compensation (270) are performed. The intra mode and/or the inter mode may comprise several distinct sub-modes. For example, the intra mode may comprise directional intra predictions, template-based intra mode derivation prediction, intra block copy prediction or others modes spatially predicting the samples values of the unit. The inter mode may comprise skip mode, merge mode according to which motion information is derived from a list of motion candidates and no motion vector prediction residual is encoded, an inter mode according to which motion information is derived from a list of motion candidates and further refined either by encoding motion vector prediction residual or by template-matching performed both at the encoder and the decoder, further inter modes are also possible. The encoder decides (205) which one of the intra mode or inter mode to use for encoding the unit. When different intra modes and/or inter modes are possible, the endoder decides (205) which of the intra modes or inter modes to use. The encoder indicates the intra/inter decision by, for example, one or more syntax element signaling the prediction mode. The encoder may also blend (205) intra prediction result and inter prediction result, or blend results from different intra/inter prediction methods. Prediction residuals are calculated, for example, by subtracting (210) the predicted block from the original image block.

The motion refinement module (272) uses already available reference picture in order to refine the motion field of a block without reference to the original block. A motion field for a region can be considered as a collection of motion vectors for all pixels with the region. If the motion vectors are sub-block-based, the motion field can also be represented as the collection of all sub-block motion vectors in the region (all pixels within a sub-block have the same motion vector, and the motion vectors may vary from sub-block to sub-block). If a single motion vector is used for the region, the motion field for the region can also be represented by the single motion vector (same motion vectors for all pixels in the region).

The prediction residuals are then transformed (225) and quantized (230). The quantized transform coefficients, as well as motion vectors and other syntax elements, are entropy coded (245) to output a bitstream. The encoder can skip the transform and apply quantization directly to the nontransformed residual signal. The encoder can bypass both transform and quantization, i.e., the residual is coded directly without the application of the transform or quantization processes.

The encoder decodes (reconstructs) an encoded block to provide a reference for further predictions. The quantized transform coefficients are de-quantized (240) and inverse transformed (250) to decode prediction residuals. Combining (255) the decoded prediction residuals and the predicted block, an image block is reconstructed. In-loop filters (265) are applied to the reconstructed picture to perform, for example, one or more of a deblocking filtering, an SAO (Sample Adaptive Offset) filtering or an ALF (Adaptive Loop Filter) filtering to reduce encoding artifacts. The filtered image is stored at a reference picture buffer (280). Such filtered image is also referred to as a reference image in the following.

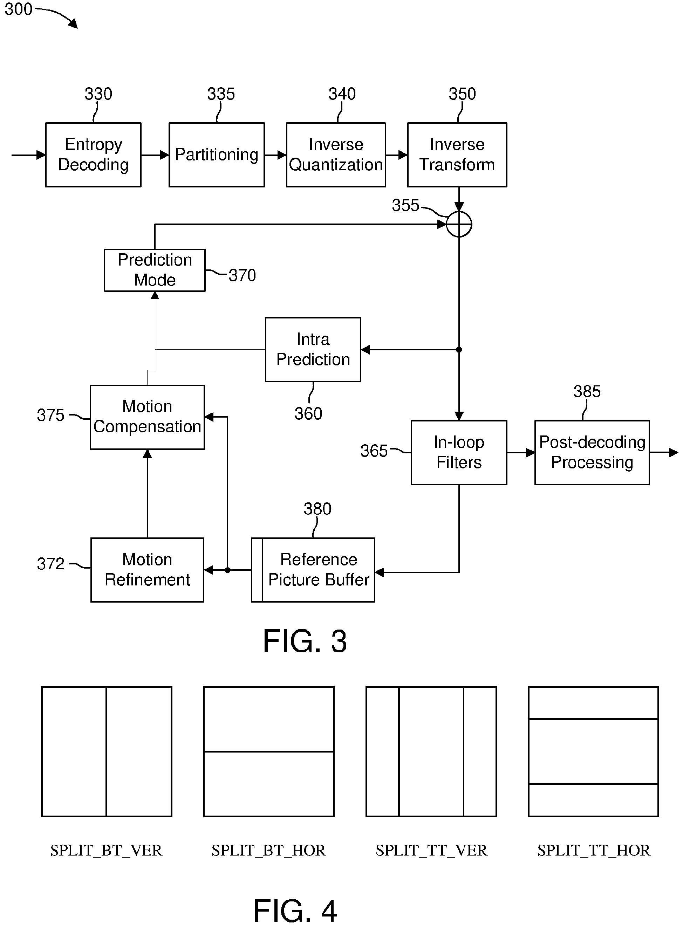

FIG. 3 illustrates a block diagram of a video decoder 300. In the decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder includes a video bitstream, which can be generated by video encoder 200. The bitstream is first entropy decoded (330) to obtain transform coefficients, motion vectors, and other coded information. The picture partition information indicates how the picture is partitioned. The decoder may therefore divide (335) the picture according to the decoded picture partitioning information. The transform coefficients are de-quantized (340) and inverse transformed (350) to decode the prediction residuals. Combining (355) the decoded prediction residuals and the predicted block, an image block is reconstructed.

The predicted block can be obtained (370) from intra prediction (360) or motioncompensated prediction (i.e., inter prediction) (375). In a similar manner as in the encoder, intra prediction and/or inter prediction may comprise several distinct sub-modes. The decoder obtains (370) the predictor block based on one or more syntax elements signaling the prediction mode among the available intra modes and inter modes. The decoder may blend (370) the intra prediction result and inter prediction result, or blend results from multiple intra/inter prediction methods. Before motion compensation, the motion field may be refined (372) by using already available reference pictures. In-loop filters (365) are applied to the reconstructed image. The filtered image is stored at a reference picture buffer (380). Note that, for a given picture, the contents of the reference picture buffer 380 on the decoder 300 side is identical to the contents of the reference picture buffer 280 on the encoder 200 side for the same picture.

The decoded picture can further go through post-decoding processing (385), for example, an inverse color transform (e.g. conversion from YCbCr 4:2:0 to RGB 4:4:4) or an inverse remapping performing the inverse of the remapping process performed in the pre-encoding processing (201), or re-sizing the reconstructed pictures (ex: up-scaling). The post-decoding processing can use metadata derived in the pre-encoding processing and signaled in the bitstream.

Some of the embodiments described herein relates to determining film grain paramters of film grain model for a video using an encoding of the images of the video.

Embodiments described herein provides a method and an apparatus for determining film grain parameters of a frequency-based film grain model using one or more results of an encoding of the video encoded using for example the video encoder 200 in FIG.2.

Film grain is a noise created during the processing of photographic film. It is naturally present in an analog film due to its nature, and it is unique to each analog film type. With the era of digital cameras, this noise has disappeared at the capturing stage but is now added afterwards to the content to recreate a movie look.

The random nature of this noise makes it difficult to compress using traditional codecs. Typical encoding tools, such as those chosen for low bit rates, may remove film grain. High bitrates are required to keep and reconstruct film grain with sufficient quality, which is contrary to the encoding/decoding targets of common video applications. To overcome this issue, it is recommended to model film grain before the encoding stage and then to add it back again, during a so-called synthesis step, at the decoding stage.

Recently, joint video exploration team (JVET) of ITUT video coding experts group (VCEG) and ISO/IEC motion picture experts group (MPEG) promotes the use of film grain as part of the video distribution chain. Within the JVET activity, a technical report describing film grain technologies has been produced in JVET-AE2020-v2: Film grain synthesis technology for video applicatons (Draft 5), D. Grois, Y.He, W. Husak, P. de Lagrange, A. Norkin, M. Radosavljevic, A. Tourapis, W. Wann 31st eeting, Geneva, CH, 11-19 July 2023. It summarizes current film grain technology and its usage in such systems. Also, VSEI specification (*Versatile supplemental enhancement information messages for coded video bitstreams - Recommendation ITU-T H.274*) provides syntax and semantics for film grain synthesis. Film grain characteristics (FGC) SEI (supplemental enhancement information) message provides the decoder with a parameterized model for film grain synthesis. Two models are supported in the FGC SEI - autoregressive film grain model and frequency filtering model.

The multimedia distribution industry began using celluloid (analogue) film as the medium for capture, editing and distribution. Content distribution evolved to analogue technology and then digital technologies. During this evolution, the attraction to the visual characteristics of analogue film did not fade. Due to its physical nature, analogue film produced a visual experience that was appreciated by many. Film grain is one of the characteristics of analogue film and is considered a primary contributor to the visual appearance of analogue film, e.g. film look or also known as the cinematic look. Film grain is a product of the physical characteristics of analogue film. It refers to the spatiotemporal variations in optical density of processed film that resulted from photographically developing the light-exposed silver-halide crystals dispersed in photographic emulsion (E. Allen, and S. Triantaphillidou, The manual of photography. CRC Press, 2012). Images are thus formed by exposure and the development of these crystals. In colour images, where the silver is chemically removed after development, dye clouds (like soft, tiny grains) are formed on the sites where the silver crystals have been exposed. Grains are randomly distributed in the resulting image because of the random formation of silver crystals in the original emulsion. The naked eye cannot distinguish individual grains, which are about 2 microns down to about a tenth of that in size. Instead, the eye resolves groups of grains in an image, that an observer identifies as a grainy look that is commonly called "film grain".

Film grain appearance is therefore inevitable because of the physical nature of the process embedded in the film design itself. However, historically, it was considered as noise, and as such, technological advances have gone in the direction of its elimination. The silver-halide crystals were engineered to be smaller and less visible, however due to the physical design and characteristics of analogue film, it was not possible to completely eliminate the grainy look. With the advancements of digital camera sensors and their widespread utilization, the grainy look has been mostly eliminated.

Although digital sensors have brought many possibilities in terms of visual quality and visual processing, the "film look" lives on among professionals and film enthusiasts. Within the new era, film grain has turned into a visual tool and not just a by-product of chemical processing as in the case of analogue film stock.

Note that the term film grain also includes synthetic film grain that can be added in post-production to digitally captured high-value content for artistic effect or to mask imperfections in digital footage, which can otherwise look too sharp and unnatural. The term "film grain" can sometimes be used informally to refer to image sensor noise, particularly in low light and high-speed captures. Therefore, perception of moderate grain texture is a desirable, often sought after, characteristic in motion picture and video productions. It is considered a requirement in the motion picture industry to preserve the grainy appearance of images throughout the image processing and delivery chain. Intuitively, in this context, the presence of film grain can help to differentiate 'real-world' images from 'computer-generated' material, which are commonly created with no film grain. Even when movies are captured with digital cameras, artificial film grain can be added at a post-processing stage to create a specific look, which artists qualify as "soft", "organic", or "living". Synthetic film grain is also used to harmonize capture from different cameras, potentially mixing film and digital capture and different lighting conditions.

Film grain preservation during video distribution, and especially when targeting low bitrate applications, can be challenging for two reasons. First, compression gains related to temporal prediction cannot be fully leveraged because of the random nature of the grain. Film grain noise is temporally independent, and as a result, motion compensation cannot be efficiently used for its prediction. Second, the grain commonly appears at high spatial frequencies, and it is typically filtered with other noise by in-loop filters, such as deblocking filters, or due to the quantization process.

This challenge is more severe with recent coding formats, as bitrate gains have come along with noise elimination. In addition, introduction of pre-filtering in the video distribution chain can potentially remove film grain prior to compression. The use of quantization matrices could potentially assist in the preservation of some of the film grain within the video content, however this also can have severe limitations, especially at lower bitrates, and for streaming applications (D. Grois, and A. Giladi, "Perceptual quantization matrices for high dynamic range H.265/MPEG-HEVC video coding", Proceedings SPIE 11137, Applications of Digital Image Processing XLII, 1113700, February 2020 and D. Grois, and A. Giladi, "HVS-Based Perceptual Quantization Matrices for HDR HEVC Video Coding for Mobile Devices", International Broadcasting Convention (IBC) 2020, September 2020).

Within the current encoding/decoding systems film grain modeling may be composed of two parts. On the encoder side, film grain technology provides means to denoise and/or analyze source video to improve compression and to determine statistical characteristics of the film grain to be synthesized at the decoder. This part may be skipped, and model parameters may be provided manually, e.g. hand tuned by the experts to mimic specific film grain look. At the decoder side, film grain technology provides the means to synthesize and blend film grain with the decoded video.

It was determined that removing the film grain by filtering the content, compressing, and providing information that enables the regeneration of the film grain, even if that is just an approximation, can result in more efficient coding performance and a better visual outcome. This is called film grain modelling.

To synthesize grain, use of light-dependent film grain model parameters can be useful, particularly for the simulation of photographic film grain, as photographic film grain is intrinsically light intensity (exposure) dependent. First, variation of film opacity is the result of a variation of grain density which has an impact on the perceived grain. Also, film is organized in several layers (usually 3) for each colour component, with various light sensitivities to reach to its full dynamic range. Light-sensitive crystals have a distribution of sizes. Larger crystals capture more photons and are more likely to be exposed than smaller crystals, particularly in darker regions. This results in a dependency of the noise characteristics on brightness.

Hence, a good model is considered to have a capability to reproduce a variety of grain shapes (appearances or film grain types) and to be able to adapt grain strength according to the image characteristics. In some situations, within one image it can be useful to have different image regions with different grain characteristics or no grain at all (e.g. see JVET AG0215-v1 AHG9/AHG13: Region-dependent film grain characteristics, P. de Lagrange, E. François, M. Le Pendu, C. Salmon-Legagneur, 33rd Meeting by Teleconference, 17-26 January 2024).

Two main film grain use cases are presented below:

1 . The first use case of film grain synthesis is artistic intent: recreate the film grain at the decoder side, which was unavoidably lost by compression involved in content distribution at practical bitrates. In this case, the film grain is considered to be a significant aspect of the video, and the content provider wants it to be part of the user experience. Preserving film grain through video compression would require too high bit rates for applications such as adaptive streaming and broadcasting. On the other hand, removing film grain allows using the full potential of video compression technologies, while requiring film grain synthesis after decoding.

2. The second use case, which can also complement the first one, is the masking of compression impairments, like blocking, banding, "mosquito" noise, etc., including impairments due to quantization. If there is no artistic intent, then the constraints on film grain model accuracy can be relaxed. For this use case, the encoder can adjust film grain parameters to fit the coding parameters, so that the intended defect masking is effective (e.g. by adjusting noise amplitude based on quantization step sizes).

The use of film grain modelling technologies can be beneficial for image and video compression by providing improved subjective quality at a lower bitrate for certain types of video content. For example, these technologies can potentially provide benefits to video content that contains noise, such as film grain or image sensor noise.

Thus, film grain modelling technologies provide a means of optionally removing noise prior to or during the encoding process to improve compression efficiency and, subsequently, to reconstruct an approximation of the film grain during or after the decoding process. It can also be used to add visual noise to decoded video to mask or attenuate the visibility of compression artefacts. Note here that visually pleasant noise can be added to the decoded video even if the source video had no visible noise/film grain to fulfil the masking task mentioned above.

Film grain synthesis is commonly based on Gaussian noise generation, with spatial correlation modelled by frequency limits (for frequency-based model), and local adaptation that consists of adjusting grain amplitude and, optionally, correlation, to target image intensity levels.

Film grain creation can be run for a limited area (e.g. 64×64 samples), further called a "template", that is then randomized to generate the full picture of noise. Several such templates need to be generated when spatial correlation varies across intensity intervals, e.g. when film grain shape is not the same across the image on which noise is to be added.

Template pattern randomization (i.e. extension to the full picture) can be performed by dividing the picture into blocks smaller than the template (e.g. 16×16 or 32×32 blocks compared to a 64×64 template), and by choosing a pseudo-random offset within the template space for each of those smaller blocks.

Local adaptation can be based on a local average (e.g. the average intensity of a sub-block); a scaling factor and, optionally, a specific template are selected depending on the underlying image intensity.

Thus, the key model parameters are the amplitude and spatial correlation of the film grain as a function of the intensity (e.g. luma value) of the source video and the type of spatial correlation model used, e.g. frequency-filtering approach.

In a frequency filtering model, the film grain characteristics are specified by horizontal and vertical spatial cut-off frequencies. The film grain template (denoted here as G) for a given set of cut-off frequencies can be generated as follows:

1) Generate a two-dimensional array of random-value elements having a normalized Gaussian distribution, here referred as $n$. The two-dimensional array represents discrete cosine transform (DCT2) coefficients. The column and row indices of the array represent horizontal and vertical frequencies, respectively. The array size N can be implementation dependent.

2) Set the value of all elements of the random-value DCT2 array to 0 when the corresponding column and row indices are not within the corresponding high and low horizontal and vertical cut-off frequencies (high and low horizontal and vertical cut-off frequencies are model parameters: *low_horizontal, low_vertical, high_horizontal, high_vertical*). Also set the DC element to zero.

$$n(0,0)=0$$
$$for(\ y=0;\ y<N;\ y++\ )$$
$$for(\ x=0;\ x<N;\ x++\ )$$
$$if((\ x<low\_horizontal\ \&\&\ y<low\_vertical)$$
$$x>high\_horizontal\ ||\ y>high\_vertical\ )$$
$$n(x,y)=0$$

3) Calculate the inverse discrete cosine transform (IDCT2) of the array produced in step 2 to get final film grain template $G$.

$$G = IDCT2(\ n\ )$$

Film grain characteristics vary significantly depending on exposure, both in terms of amplitude and spatial correlation, with the amplitude variation being the most obvious. These variations are inherent to the image formation process at the physical film level. Replicating them on synthetic grain makes it look natural by anchoring it into the image, while a fixed overlay would likely not be visually pleasing.

Here, local adaptation consists of selecting the relevant film grain template and grain amplitude according to sample values and model parameters. For example, a dependency of grain strength/amplitude on the signal intensity can be defined for each colour component. In addition, specific grain correlation parameters can depend on the signal intensity.

Local adaptation can be performed on a sub-block basis based on the local intensity average of the sub-block.

Adaptation of grain shape consists of selecting a specific film grain template depending on local intensity, according to the model. This requires the initial stage to generate as many film grain templates as required to fit the model within practical implementation limits. For implementations using a single template, local adaptation of grain shape is not supported.

Adaptation of grain amplitude consists of scaling the amplitude of the film grain template selected in the previous step by a scaling factor that depends on local intensity, according to the model. Hereafter, the relationship of grain amplitude to local intensity is called the film grain scaling function.

Examples of Block partitioning structure as used in some video compression systems are described below.

In VVC, one picture is divided or partitioned into multiple non-overlapping Coding Tree Units (CTU). A CTU size in VVC can be set up to 128×128 for luma samples.

Each coding tree unit (CTU) is either processed as one coding unit or split into multiple coding units (CUs) by one or more recursive quaternary tree (QTBT) partitions followed by one or more recursive multi-type tree splits, such as Binary Tree (BT) or Ternary Tree (TT). Examples of Binary Tree split and Ternary Tree split are illustrated on FIG. 4 showing vertical binary tree split, horizontal binary tree split vertical ternary tree split and horizontal ternary tree split. A CTU dual tree for intra-coded slices is described on top of the block partitioning structure, that separates coding trees for luma and chroma.

The splits (QTBT, BT or TT), applied to each CTU, resulting in one or multiple CUs, have square and rectangular shapes. They allow a better fit to local picture content characteristics and features.

By increasing the CTU size up to 128x128 for luma, the coding efficiency is often increased but also at the expense of increasing the complexity. The size of each CU is related to the information present in the CU itself, and more precisely is related to the rate distortion (RD) cost of the CU. The rate distortion (RD) cost of a candidate block is calculated as follows:

$$CostRD = D + Lambda(QP)R$$

where D is the distortion (L2, i.e., mean square error) of current block with its coding parameters, R is the associated rate (in number of coding bits) and Lambda(QP) is the Lagrange parameter deduced from the quantization parameter QP. High QP generates less but larger CUs than small QP. Once the partitioning is completed during the coding stage, several features are available for intra frames and for each CU such as:

- intra prediction mode: it indicates which prediction mode is used, for example planar or angular prediction
- code block flag (CBF): it indicates if residuals are added on top of the prediction. The flag is coded per components
- bit per pixel cost (bpp): these data can be extracted by an encoder during the encoding stage
- DCT transformed coefficients: values of the transformed coefficients before quantization and values of the transformed quantized coefficients.
- Significance flag, last x y significant coefficients in a quantized transform block: these parameters signal which coding groups inside a Transform Unit contains coefficients.

Modeling a film grain is a key element of film grain analysis and synthesis. A good model is considered to be capable of producing (synthesizing) the desired film grain appearance with reasonable computational complexity. Also, there is a need in the industry for efficient and accurate automatic estimation of film grain model parameters. Thus, a good model also requires feasibility to implement automatic processes that can lead to parameters that, when used at the synthesis part, can reproduce the initial (or close to initial) appearance of the grain film. By efficiently and precisely estimating model parameters original (or close to original) film grain "look" may be obtained at user (decoder) side. By doing that, initial appearance of the video can be preserved by using lower bitrates.

One of the widely used film grain models is frequency-based model. The frequency-based model is described in emerging technical report *JVET AE2020-v2,* it is used in VSEI FGC specification, and also in *SMPTE RDD 5-2006 Film grain technology specifications for H.264 | MPEG-4 AVC* bitstreams.

The common techniques used to estimate a model parameters of a frequency-based film grain model consist in extracting cut-off frequencies and extracting relationship of film grain amplitude to local intensity (extracting film grain scaling function) per each image block. This is classically done independently of the encoding process. It is therefore an overhead at the encoding stage: because it is CPU and memory consuming.

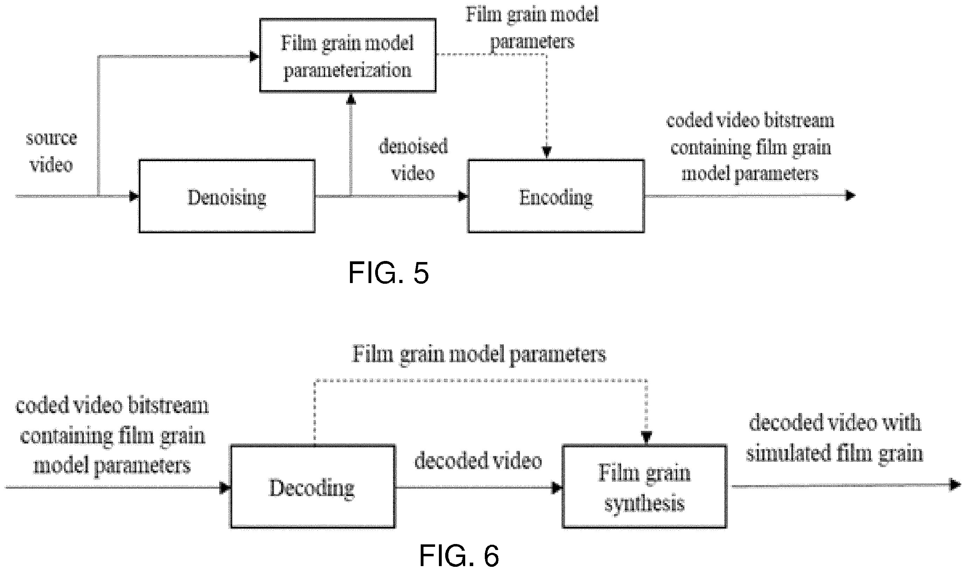

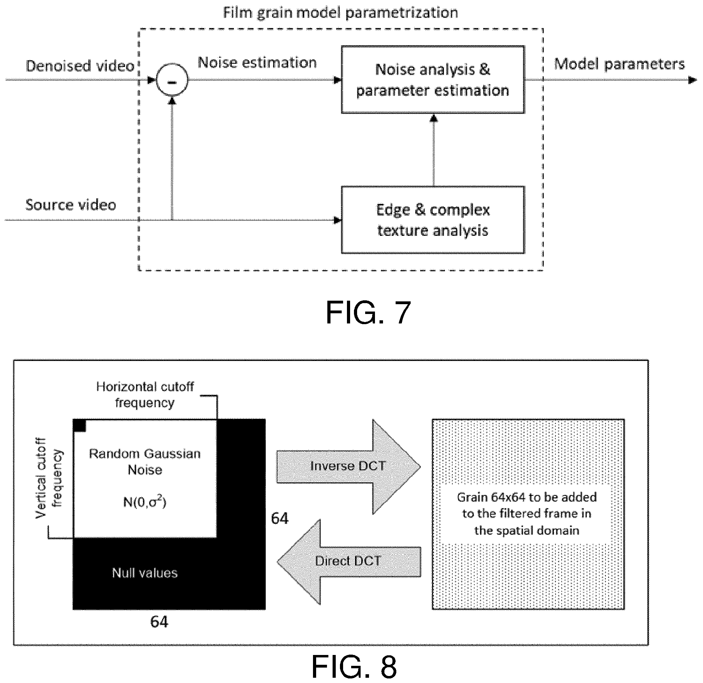

As explained above, there are two stages in film grain preservation: analysis which consists of denoising, flat regions selection and model parameter estimation (as illustrated on FIG. 5 and 7) and synthesis which consists of adding film grain to the de-compressed and/or de-grained video based on the provided model parameters (as illustrated on FIG. 6).

Embodiments provided herein focus on the analysis part or film grain model parameter estimation (film grain model parametrization). The grain analysis requires the source video frame with grain and the corresponding filtered (denoised) video frame without film grain. This filtered frame is first obtained via a denoising step. In some special cases instead of denoised frame, reconstructed (decoded) frame may be used with the respect that the quantization parameter is within the operational range for this purpose, e.g. not too low to preserve grain but also not too high to introduce strong coding artifacts even on flat regions of a frame. Flat regions are then extracted within the edge and complex texture analysis module, as shown in FIG. 7. Flat regions may be extracted from the source video, or in some implementations flat regions may be extracted from the denoised video frame. Film grain analysis is done only on the flat regions to avoid interference of other image characteristics such as edges and textures. Film grain analysis also uses noise estimate which is simply computed as the difference between the original frame and its filtered/denoised/decoded version.

Once obtained, the grain parameters are sent along with the compressed video bitstream. After the decoding, the film grain is synthesized and added back to the reconstructed video frames. The film grain preservation workflow in an encoding/decoding context is summarized in FIGs 5-7.

Note that all parts of the analysis workflow are done outside the encoding block. State of the art methods for determining film grain parameters rely on an additional process to extract the film grain parameters, which might not be suitable for very low complexity and/or low latency encoders.

In the embodiments presented here, the analysis of the film grain (i.e. determining the film grain parameters) is done in a more efficient way by re-using some of the information obtained during encoding.

In state-of-the-art techniques, as explained above, the grain model is defined in the DCT domain, also depicted on FIG. 8. The same process may be applied to each component of the picture (Luma Y, and Chroma Cb, Cr or R, G, B if the format is RGB). Most of the CTU blocks in VVC or HEVC are also based on DCT decomposition, therefore in some embodiments the partitioning and transform/quantization steps of the encoder are leveraged to help and assist the film grain analysis process.

Blocks of 64x64 pixels are considered, but it could be also 16x16 or other shape size, although other dimensions may be used. A 64x64 template (it could be also 16x16 or other shape size) of grain follows a model based on a random Gaussian noise in a subpart of the 64x64 template (it could be also 16x16 or other shape size) in the DCT domain. The main features that model the grain using frequency-based model are the variance $\sigma^2$ of the noise and the cut-off frequencies that limit the area in frequency domain where the noise is present. Two cut-off frequencies (horizontal and vertical cut-off frequencies) are used when low-pass frequency filtering is used, even if in theory band pass frequency filtering represents a more generalized approach in which four cut-off frequencies (low and high cut-off frequencies) are required by model. For example, VVC reference software implements film grain analysis and synthesis where low-pass filtering is used (hence two cut-off frequencies are used), while the model presented in VSEI defines band-pass filtering (hence four cut-off frequencies are used). The cut-off frequencies define the grain shape. If they are equal, the grain is circular. The DC component is set to a zero value in order to obtain a centered patch grain in the spatial domain.

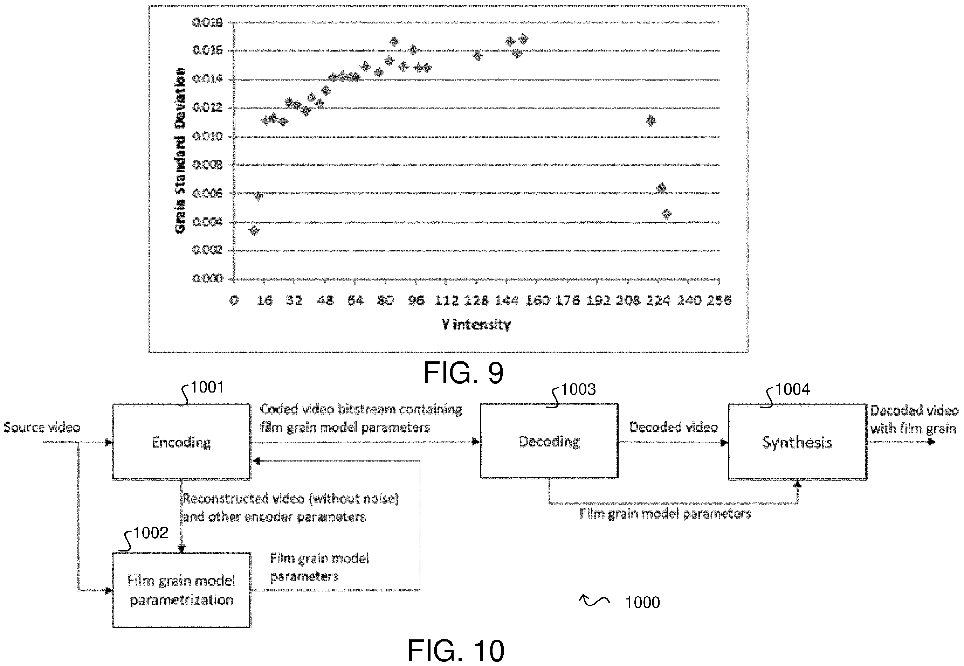

The value of $\sigma^2$ depends on the mean intensity value of the image block to which grain has to be added, making the synthesis of film grain, i.e., adaptation of grain amplitude, region dependent. FIG. 9 shows an example of the grain variance with respect to the intensity level in the Y component (relationship of grain amplitude to local intensity). Cut-off frequency values are supposed to be constant on consecutive video frames, for a given shot. However, in some cases, cut-off frequencies may be different from region to region even within the same frame.

Moreover, depending on the artistic look or based on the properties of the physical film, the film grain intensity is also made dependent on the texture present in the regions: the more textured the regions, the higher the film grain intensity.

In some embodiments, cut-off frequency values are estimated according to parameters and information obtained during encoding instead of performing separate film grain analysis step.

FIG. 5-7 sum up the workflow of legacy solutions:

- Film grain analysis is done outside the codec workflow.
- Parameters are sent (typically using a SEI message) to the decoder.
- A synthesizer, as a post filter, puts back film grain on the final image before displaying.

For example, with the FGC SEI (Film Grain Characteristic Supplemental Enhancement Information, which is a standardized parameter structure to signal film grain that will be synthetized after decoding and blended to the picture), film grain parameters are signaled for a given intensity interval. In that case, film grain parameters are estimated per intensity interval.

An aim of the embodiments provided herein is to leverage the encoding process to perform film grain parameters estimation using flat regions. For example, the encoding process provides block partitioning that can be used to identify flat regions. Encoding process also provides frequency coefficients computed during the transform phase (225 in FIG. 2). Frequency coefficients may be used to extract the cut-off frequencies of the film grain frequency model, the variance of the noise/grain and scaling factor values of the grain (film grain parameters). An advantage of the provided embodiments is to speed up and improve the film grain parameters estimation.

The embodiments described herein provide synergy of the encoding process with the film grain analysis process in order to reuse useful information obtained during the encoding process within the film grain analysis. In such sense, computing resources may be more efficiently exploited.

FIG. 10 illustrates an overview of a video encoding and a video decoding according to an embodiment. A source video is encoded (1001) using for example an encoder as described with FIG. 2, providing a bitstream comprising the coded video. Film grain model parametrization determines (1002) the parameters of the film grain model that mimics the film grain of the source video. In the embodiments described herein, the determination of the parameters of the film grain model can use the reconstructed video (without noise) and other parameters resulting from the encoding of the video. Film grain model parameters are then encoded in the bitstream with the coded video. The bitstream is transmitted to a decoder which decodes (1003) the video to provide a decoded video and decoded film grain parameters. For example, the video decoder can be a decoder as the one described with FIG. 3. The synthesis (1004) applies the film grain model to the decoded video using the decoded film grain parameters, to provide a decoded video with film grain. Within the film grain model parametrization (i.e. analysis process that determines the parameters of the film model), the following steps are performed.

In a first step, the flat region selection extracts in an image the flat regions that are used in film grain parameter determination. Flat region detection can be performed for example using encoding information. For example, film grain parameters can be obtained by using codec information such as coding unit partitioning for intra frame during the encoding. The flat regions can be selected by analyzing relevant information for each block or CU (QP, Coding Unit (CU) size, intra prediction mode, Code Block Flag, Bit Per Pixel cost, last significant coefficient position, DCT coefficient distribution, Intra Sub Partition mode). In this manner, the selected regions correspond to blocks or CU provided by the partitioning decision and encoding of the image. Results from this first step is a set of selected blocks. Depending on the partitioning decision, these blocks may not have the same size.

Then, internal encoder information (e.g. transform and/or quantized coefficients, QP, prediction mode, and other coding information) is used to derive the film grain parameters of the film grain model. For example, film grain parameters can be cut-off frequencies that define the size and the shape of the grain, the variance $\sigma^2$ or grain standard deviation in the frequency domain and the scaling factor that is the strength of the grain.

Intra frames may only be considered since partitioning and information of each CU are more relevant for film grain analysis than other frame types. However, the proposed embodiments may be applied to other frame type like P or B frames. In an embodiment, the encoding information from the luma component is used for the analysis. In a variant, in case of colored grain, encoding information from chroma can be used for analysis, i.e. when grain persists in chroma components. In case of the analysis of the grain in chroma components of a video, the same variants as for luma grain analysis may be applied. Hence, analysis is applied per component and for each component individually. In the following, some examples are given for the luma component of the video signal, however, without further limitations, it may be extended to the chroma component as well. Each CTU is either processed as one CU or split into multiple CUs by a recursive quad-tree QT, followed by a recursive binary-ternary tree (BTT), called also muti-type tree (MTT). As defined previously, the rate distortion (RD) cost of a candidate block is driven by the Quantization Parameter (QP), which defines the quantization level. Two scenarios can be distinguished therefrom: one considers high bitrate and high PSNR where QP is low and another considers low bit rate and low PSNR where QP is high.

Typically, by using modern codecs such as VVC, for example with QP>=22, the film grain is filtered and not preserved. The quantization applied in the encoding stage can be considered as a denoiser and is useful to estimate a filtered version without film grain, e.g. by using reconstructed block/frame. In this case, no additional denoiser is needed as reconstructed block/frame is noiseless. If QP<22, an additional denoiser is required to filter and remove the film grain. Such an additional denoiser can be a spatial filter such as BM3D described in Dabov, Kostadin; Foi, Alessandro; Katkovnik, Vladimir; Egiazarian, Karen "Image denoising by sparse 3D transform-domain collaborative filtering". IEEE Transactions on Image Processing 2007 or a spatiao-temporal filter such as MCTF described in Ralf Schäfer, Heiko Schwarz, Detlev Marpe, Thomas Schierl, and Thomas Wiegand, "MCTF and Scalability Extension of H. 264/A VC and its Application to Video Transmission, Storage, and Surveillance ", VCIP 2005.

In other words, if QP<22, the low quantization level preserves some noise in the reconstructed data, hence the analysis may be compromised. In addition, using a denoiser in this scenario (low QP, high bitrate) is not typical encoder practice. For example, in the current VTM implementation, MCTF is not enabled for the low QPs. Hence, even if a denoiser is used, it may be required to use it only for the purpose of the film grain analysis and not for the purpose of encoding (e.g. still unfiltered source video will be coded to the bitstream).

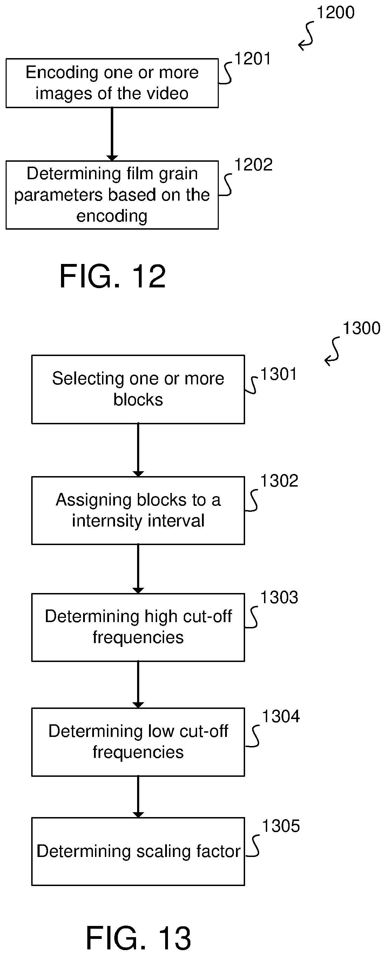

FIG. 12 illustrates an example of a method 1200 for determining film grain parameters according to an embodiment wherein one or more images of the video are encoded at 1201 and at 1202, film grain parameters are determined based on the encoding as described in FIG. 10.

FIG. 13 further details some steps for determining (1300) film grain parameters. In the embodiment of FIG. 12, at least one of the steps (1302-1305) uses encoding parameters resulting from the encoding of at least one part of the video, which can be one or more images, or part of one or more images.

At 1301, one or more blocks of the video are selected by detecting flat regions. According to a variant, in the current workflow, e.g. VTM implementation, the original/source image or a filtered version of the source image is used to obtain flat regions for further film grain analysis. The same process for determining the flat regions can be used herein. In another variant, instead of using the source image or a filtered image, the reconstructed image obtained after encoding and decoding of the source image can be used for determining flat regions. In a variant, the partitioning decided during encoding of the source image is used and block such as CU, CTU, or any other sub-region of the image can be used to detect the flat regions. In a further variant, that can be combined with the previous one, flat regions can be detected based on encoding parameters as described above. Encoding parameters decided for each block or CU during encoding of the source image can be used such as: QP, Coding Unit (CU) size, intra prediction mode, Code Block Flag, Bit Per Pixel cost, last significant coefficient position, DCT coefficient distribution, Intra Sub Partition mode.

As explained above, the film grain parameters can be determined per intensity interval. In this case, the intensity range of the video is subdivided into a set of intensity intervals. In the following, it is considered consider that film grain parameters are determined per intensity intervals. But the same approach can be used when determining the film grain parameters on the whole intensity range. At 1302, each one of the selected blocks is assigned to an intensity interval. In an embodiment, this assignment can be done by estimating an intensity average of a selected block based on reference samples used to predict the block or based on a DC coefficient determined for the block. At 1303, a high horizontal cut-off frequency and a high vertical cut-off frequency are determined for each intensity interval. In an embodiment, the high horizontal/vertical cut-off frequencies are determined by applying transforms determined for the selected blocks of the intensity interval at the encoding of the video on corresponding blocks of the source image. In another embodiment, the high horizontal/vertical cut-off frequencies are determined using the transformed blocks obtained during the encoding of the video for the selected blocks of the intensity interval before quantization.

At 1304, a low horizontal cut-off frequency and a low vertical cut-off frequency are determined for each intensity interval. In an embodiment, the low horizontal/vertical cut-off frequencies are determined by applying transforms determined for the selected blocks of the intensity interval at the encoding of the video on corresponding blocks of the reconstructed image. In another embodiment, the low horizontal/vertical cut-off frequencies are determined using the transformed blocks obtained during the encoding of the video for the selected blocks of the intensity interval after quantization.

At 1305, a scaling factor is determined for each intensity interval. Embodiments described with 1303 can be applied to the determination of the scaling factor with further details described below. If a scaling factor or several scaling factors are missing, they can be interpolated by the neighboring intensity interval.

As expressed above, several embodiments to use encoding of the video for determining the film grain parameters are possible.

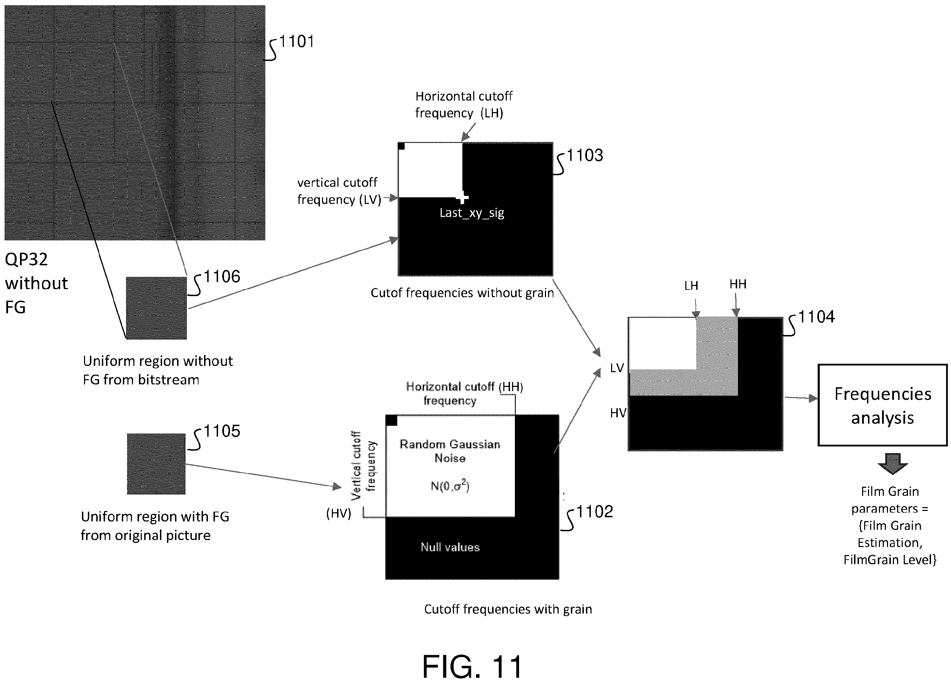

In a first embodiment, the cut-off frequencies and mean average are derived from the source image and from the reconstructed image (the image obtained after encoding and decoding). In this embodiment, it is considered that the transform is the DCT, but it may be applied to other transforms as well, e.g. DST. Transforms determined during encoding of the video for the selected blocks are applied on the corresponding blocks of the source image and the reconstructed image. This embodiment is for example illustrated with FIG. 11.

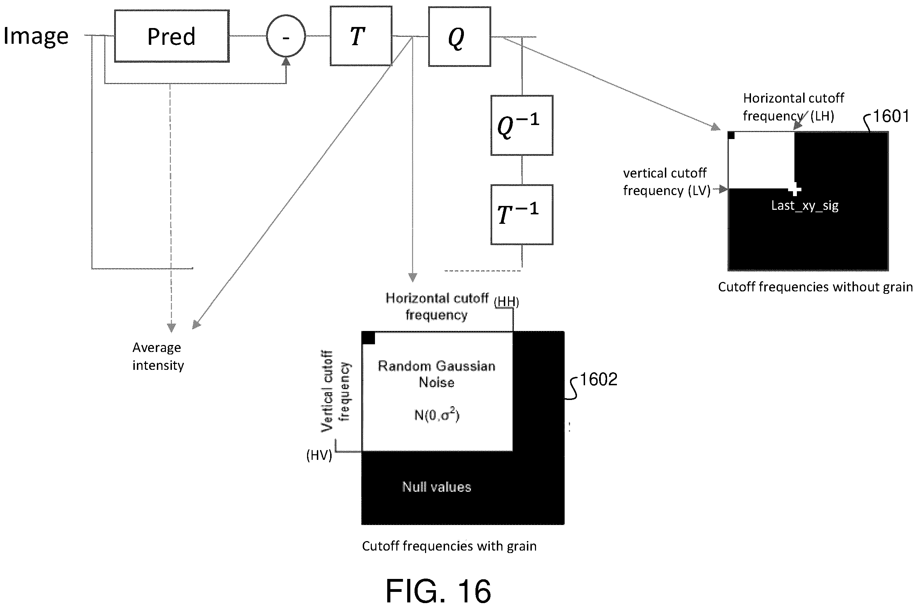

In a second embodiment, the cut-off frequencies and mean average are derived from the encoder information computed during the Rate Distortion Optimization (RDO), that is during encoding. For example, after the transform stage (225), the CU is represented by transform coefficients (for example DCT coefficients) with noise (no quantization is applied yet). The Quantization (Q) stage follows the transform stage. After the Quantization, the CU is represented by its transformed quantized coefficients (for example quantized DCT coefficient) without noise (if quantization step QP is sufficiently high as explained before). In this embodiment, the mean average and cut-off frequencies are then derived from transform coefficient values computed before and after the quantization process. This embodiment is for example illustrated on FIG. 16.

Further details for assigning intensity interval to the selected blocks (step 1302 of FIG. 13) are provided below. The same processing is applied for the first embodiment and the second embodiment.

At 1302, each selected block is assigned to an intensity interval $r$. The intensity range of the image or video signal, for example pixel luma value Y, e.g from 0 to 255 for 8-bit dynamic range, is divided in R sub-ranges (also called herein intensity interval). The goal of the analysis is to extract, for every sub-range (intensity interval), here denoted as $r$, the scaling factor and the cut-off frequency values of the grain. These parameters are accumulated along flat blocks of the image detected at 1301. Eventually, accumulation can be performed along successive images if necessary. Accumulation improves the estimation of the parameters by discarding or weighting impact of potential outliers.

To derive the intensity interval *r* of a current selected block (example a unit of 16x16 pixels or 64x64 pixels), the average intensity of the current selected block, here denoted as *Avgl,* is needed. Simply the current selected block falls to interval *r* if its average intensity *Avgl* is within the interval *r.* The average intensity *Avgl* can be given by the average intensity level of the current selected block, e.g. for the luma component the average intensity of luma block. The average intensity level of the current selected block can be estimated using different strategies.

Note that in the embodiment provided here as encoding result is used, the average intensity of the current selected block is an approximation of the real average value of the current selected block in the source image.

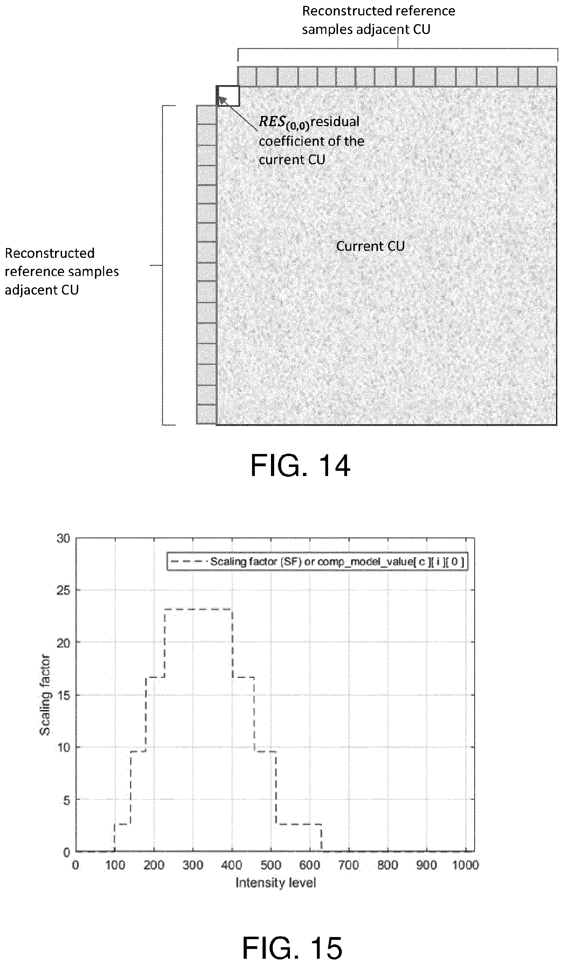

In a variant, in case of DC intra prediction mode, the mean of the reference samples used for predicting the current selected block can be used. The reference samples correspond to the adjacent reconstructed values relative to the current selected block as illustrated on FIG. 14 (the current selected block is noted current CU in FIG. 14. In this variant, the first residual coefficient of this current selected block, i.e. $RES_{(0,0)}$ that corresponds to top-left residual can also be used as follows:

$$AvgI = \mu(RefSample) + RES_{(0,0)} = \mu(RefSample) + ORIG_{(0,0)} - PRED_{(0,0)}$$

$$= \mu(RefSample) + ORIG_{(0,0)} - \mu(RefSample) = ORIG_{(0,0)}$$

with "=" is considered not to be strictly "equal to" but as "an approximation of".

With $\mu$ is the mean or average of the reference samples *Ref Sample, $ORIG_{(0,0)}$* is the original value of the top-left sample of the current selected block, $PRED_{(0,0)}$ is the prediction value of the top-left sample of the current selected block.

In case of DC prediction mode, instead of using the first top-left residual value, any other pixel from the block may be used instead of residual coefficient $RES_{(0,0)}$.

Note that for DC prediction mode, $\mu(RefSample) = PRED_{(0,0)}$.

In another variant, the average intensity *Avgl* of the current selected block may be estimated as:

$$AvgI = \mu(RefSample)$$

Note that this case is not limited only to Intra DC mode, and it can be applied in case of average intensity estimation for other prediction modes. The mean $\mu$ of the (reconstructed) reference samples from the current selected block $\mu(RefSample)$ derived from the reconstructed values in the adjacent blocks (FIG. 14) can be used to estimate *Avgl* in a general case.

In a variant that applies to all prediction modes, the transform used by the encoder can be utilized (e.g. LFNST, DCT or any other transform). A good approximation of the average intensity *Avgl* can be calculated from the transformed coefficients by using:

$$AvgI = \mu(RefSample) + Coeff\_DC$$

where *Coeff_DC* is a scaled version of transformed coefficient at top-left position (0,0) of the block after transform and before quantization. For example, scaling may be given with:

$$Coeff\_DC = Coeff\_DC/\sqrt{(w * h)},$$

where w and h are dimensions of the current selected block. Additional scaling of *Coeff_DC* may be applied due to integer approximation of the transforms which are typically implemented in video coding standards.

In a variant, the exact value of the average intensity of the current selected block can be computed during or after the reconstruction stage. However, the variants proposed above use less arithmetic operations within the calculating (or approximating) average intensity of the current selected block.

Then, the intensity interval *r* of the current selected block is derived from the average intensity *Avgl.* In case of uniform subdivision of the intensity range of the video (when the luma signal range is divided into uniform intensity intervals), *r* corresponds to a quantized version of Avgl. Otherwise, *r* is chosen such that $r_{min} <= Avgl < r_{max}$, where $r_{min}$ and $r_{max}$ are boundaries of the intensity region *r.*

FIG. 11 illustrates an example for deriving high horizontal (HH) and vertical (HV) cut-off frequencies and low horizontal (LH) and vertical (LV) cut-off frequencies according to a first embodiment. In a general embodiment, HH and HV cut-off frequencies are determined using a transformed block (1102) obtained from a one or more selected blocks that still present some grain signal and LH and LV cut-off frequencies are determined using a transformed block (1103) obtained from a one or more selected blocks that do not present grain signal anymore. As illustrated on the combined block (1104), it is assumed that grain signal is present in the medium frequencies of the image signal (grey part of block 1104) in-between the low frequencies (white part of 1104) and high frequencies (black part of 1104). The frequency analysis for determining the HH, HV , LH, and LV cut-off frequencies and the scale factor provides the film grain parameters.

In a first embodiment illustrated on left part of FIG. 11, the HH and HV frequencies are determined using a transform block obtained from one or more blocks (1105) selected from the source image (before encoding). In this first embodiment, the LH and LV frequencies are determined using a transform block obtained from one or more blocks (1106) selected in the reconstructed image (after encoding and decoding). The blocks selected in the reconstructed image correspond to the same blocks as the ones selected in the source image.

In a second embodiment illustrated on FIG. 16, the cut-off frequencies are determined from transformed blocks obtained during the encoding process of the image. The HH and HV frequencies are determined using a transform block (1602) obtained from one or more blocks selected from the source image but after these blocks have passed through the transform (T) in the encoding process. In this second embodiment, the LH and LV frequencies are determined using a transform block (1601) obtained from the same blocks used for determining the HH and HV cutoff frequencies but after these blocks have passed through the transform (T) and quantization (Q) in the encoding process.

As illustrated on FIG. 11, but this is also applicable to the embodiment of FIG. 16, the blocks selected at 1301 are aligned with the image partitioning (1101) decided during encoding of the image.

Further details for determining the high cut-off frequencies (High Horizontal HH and High Vertical HV, step 1303 of FIG. 13) for a given intensity interval *r* are provided below. The same processing is applied whether the transformed blocks are obtained according to the first embodiment or the second embodiment.

As illustrating in FIG. 11, considering the region from the source image (or in some cases noiseless-filtered or reconstructed image - of size *NxM* (e.g. 16x16 or 64x64) that corresponds to the flat region, HV (High Vertical cut-off frequency) and HH (High Horizontal cut-off frequency) are determined, these frequencies that correspond to the cut-off frequencies of the frequency model when band-pass filtering is used.

Let $\Omega_r$ be an averaged squared transformed matrix for the intensity interval *r* over the Nr accumulated blocks, where Nr is the number of blocks/CU that belong to or have been assigned to the intensity interval *r* at 1302:

$$\Omega_r = \frac{1}{N_r} \sum_{k=1}^{N_r} (\Gamma_k^r).^2$$

where $.^2$ is the element-wise square operator, $\Gamma_k^r$ is the transformed matrix of the current selected block/ CU k that belongs to the intensity interval *r*.

In the first embodiment, the transformed matrix of the current selected block *k* is obtained by applying to the version of the current selected block *k* obtained from the source image, the transform decided at the encoding for this block *k*. In a variant, the prediction determined for this block in the encoding process can be removed from the version of the current selected block *k* in the source image before applying the transform.

In the second embodiment, the transformed matrix of the current selected block *k* is the one obtained after the transform process during the encoding process.

The cut-off frequencies are then derived from the averaged squared transformed matrix $\Omega_r$.

Let $F_{cut}^{r,V}$ be the high vertical cutoff frequency as the last line in the matrix $\Omega_r$ with a significant coefficient and $F_{cut}^{r,H}$ the high horizontal cutoff frequency as the last column in the matrix $\Omega_r$ with a significant coefficient. Significant coefficient is being defined as a coefficient which value is larger than some predefined threshold or value. Mathematically, it can be written as:

$$F_{cut}^{r,V} = argmax_j(j || \Omega_r(j,i)| > \varepsilon \; \forall i)$$

$$F_{cut}^{r,H} = argmax_i(i || \Omega_r(j,i)| > \varepsilon \; \forall j)$$

where $\varepsilon$ is a predetermined value (can be 0 for example), *r* is the *r*[th] sub-range (intensity interval), *i* and *j* are respectively the line and column indices of coefficients in the matrix $\Omega_r$.

Further details for determining the low cut-off frequencies (Low Horizontal LH and Low Vertical LV, step 1304 of FIG. 13) for a given intensity interval r are provided below. The same processing is applied whether the transformed blocks are obtained according the first embodiment or the second embodiment.

Low Vertical frequency (LV) and Low Horizontal frequency (LH) that correspond to cut-off frequencies of the film grain model, can be obtained by using the encoding process with high enough QP, e.g. QP that will eliminate noise from the input video. The distribution of transformed coefficients (e.g. DCT) of one block or energy of the first low frequency transformed coefficients also brings some information about cut-off frequencies in encoded bitstream. For example, as illustrated in FIG. 11 (1104), low frequency coefficients with high energy represent the signal and may not be related to the grain. Low cut-off frequencies can be given by the position of the first "low energy" coefficient. For example, the position that comes just after the first greatest coefficient totalizing 90% of the energy may be consider as a position that corresponds to LV and LH. In other variants, another amount of energy can be considered.

As for determining the high cut-off frequencies, an averaged squared transformed matrix $\Omega'_r$ is obtained for the intensity interval $r$ over the Nr accumulated blocks assigned to the intensity internval $r$ at 1302:

$$\Omega'_r = \frac{1}{N_r}\sum_{k=1}^{N_r}(\Gamma'^r_k).^2$$

where $.^2$ is the element-wise square operator, $\Gamma'^r_k$ is another transformed matrix of the current selected block/ CU $k$ that belongs to the intensity interval $r$.

In the first embodiment, the transformed matrix $\Gamma'^r_k$ of the current selected block $k$ is obtained by applying to the version of the current selected block $k$ obtained from the reconstructed image, the transform decided at the encoding for this block $k$. In a variant, the prediction determined for this block in the encoding process can be removed from the version of the current selected block $k$ in the reconstructed image before applying the transform.

In the second embodiment, the transformed matrix $\Gamma'^r_k$ of the current selected block $k$ is the one obtained after the transform and quantization processes during the encoding process.

The low cut-off frequencies are then derived from the averaged squared transformed matrix $\Omega'_r$. Let X be a vector of coefficients f the matrix $\Omega'_r$. These coefficients can for example be DCT coefficients when the transforms apply are DCT transform. The vector X is obtained by listing all the matrix coefficients in a raster scan order for example (but any other vectorization can be used, for example z-scan). Then pseudo code that finds the index of the coefficient for which 90% of the energy can be found in previous lower coefficients according to the scan order is defined as:

$$\text{EnergyTh} = 0.9$$

$$[\text{Xsort, Xidx}] = \text{sort(abs(X))}$$

$$\text{energyTot} = \text{normL2(Xsort)}$$

$$\text{coeffIdx} = 1$$

$$\text{while normL2(Xsort(1: coeffIdx)))/energyTot} < \text{EnergyTh:}$$

$$\text{coeffIdx} = \text{coeffIdx} + 1$$

$$n = \text{Xidx[coeffIdx]}$$

This result $n$ is the index of the coefficient whose value comes just after the highest coefficients values that totalize 90% of the energy. This n = *Xidx[coeffIdx]* maps to the vertical cut-off frequency LV and to the horizontal cut-off frequency LH. The *sort(A)* function sorts elements of input vector *A* in decreasing order.

The horizontal and vertical cut of frequencies are derived (mapped) from $n$ depending on the vectorization. For example, in the case of raster-scan:

$$LV=n/(matrix\ width)\ \text{(i.e. the line index)}$$

$$LH=n\ \%\ (matrix\ width)\ \text{(i.e. the column index)}$$

where % is the modulo operation.

In another variant, *last_*xy_*sig* flag may also give similar information. It corresponds to the position *(x,y)* of the last significant quantized coefficient. It can be directly used to derive the low cut-off frequencies such as (LH, LV) = (last_x, last_y). An illustrative example is provided on FIG. 11 (1103) and FIG. 16 (1601).

Further details for determining the scaling factor (step 1305 of FIG. 13) for a given intensity interval *r* are provided below. The same processing is applied whether the transformed blocks are obtained according to the first embodiment or the second embodiment.

The scaling factor is a parameter that determines the film grain strength. It relates to the average intensity *AvgI* of the intensity interval.

As an example, the mapping between the scaling factor and the film grain intensity can be simply modeled by a look up table according to SMPTE RDD5 model, as illustrated on FIG. 15.

Grain standard deviation can be estimated as follows:

For the given $r^{th}$ sub-range (intensity interval), the grain noise standard deviation $\sigma_r$ is estimated in the region with grain based on an average value of transformed coefficients, for example as follows:

$$\sigma_r = \sqrt{\frac{1}{M} \sum_{i=start_i}^{end_i} \sum_{j=start_j}^{end_j} \frac{1}{N_r} \sum_{k=1}^{N_r} \Gamma_k^r(i,j)}$$

where $N_r$ is the number of accumulated grain patch *k* since the beginning of the sequence for the $r^{th}$ sub range (that is Nr is the number of blocks that have been assigned to the intensity interval *r* at 1302) and $\Gamma_k^r$ is the transformed block of the patch or block *k*, e.g the 16x16 or 64x64. $\Gamma_k^r$ can be the same matrix as the one obtained for the block *k* for determining the high cut-off frequencies as described above. For example, in the second embodiment, the transformed matrix $\Gamma_k^r$ of a grain patch/block *k* is already available to the encoder.

For determining the scaling factor, the grain noise standard deviation $\sigma_r$ is determined in the medium frequencies, that is using coefficients in the transformed matrix $\Gamma_k^r$ that are in a given range [starti, end$_i$] along the matrix line for the horizontal frequency and in a given range [start$_j$, end$_j$] along the matrix column for the vertical frequency.

The first coordinates that correspond to DC values are discarded.

M=(end$_i$-start$_i$+1)* (end$_j$-start$_j$+1). For example, in case of 16x16 block, the following values can be used: starti=2, endi=4, start$_j$=2, end$_j$=4. In another example, in case of 64x64 block size, the following values can be set to: starti=4, end$_i$=12, start$_j$=4, end$_j$=12.

In this variant, the scaling factor $SF_r$ of each intensity interval *r* (sub-range) is equal to $SF_r = \sigma_r$. In another variant, an additional adaptation of the scaling factor can be applied, such as:

$SF_r = a * \sigma_r$ where *a* is correction coefficient and may be but not limited to 1.

Another example for determining the scaling factor can be based on the average squared transformed matrix $\Omega_r$ coefficients as follows. For each intensity interval *r*, the scaling factor $SF_r$ is estimated from the sum of the coefficients of the average squared transformed matrix $\Omega_r$ between the high and low cut-off frequencies determined above for the intensity interval *r*:

$$SF_r = a \times \sqrt{\sum_{\substack{LV \le j \le HV \\ LH \le i \le HH}} \Omega_r(j,i)}$$

In an example, *a* being a coefficient equal to but not limited to 1.

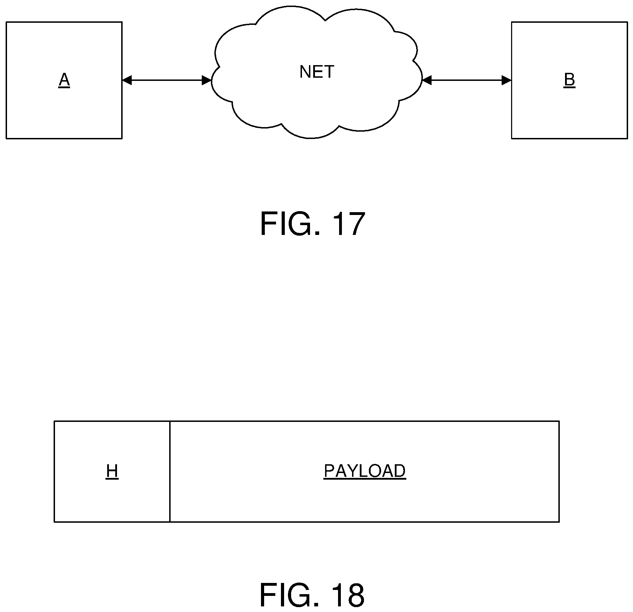

In an embodiment, illustrated in FIG. 17, in a transmission context between two remote devices A and B over a communication network NET, the device A comprises a processor in relation with memory RAM and ROM which are configured to implement a method for encoding an image or a video along with film grain parameters determined according to any one of the embodiments described herein and the device B comprises a processor in relation with memory RAM and ROM which are configured to implement a method for decoding an image or a video along with film grain parameters which are determined according to any one of the embodiments described herein. In accordance with an example, the network is a broadcast network, adapted to broadcast/transmit a coded video along with the determined film grain parameters from device A to decoding devices including the device B.

FIG. 18 shows an example of the syntax of a signal transmitted over a packet-based transmission protocol. Each transmitted packet P comprises a header H and a payload PAYLOAD. In some embodiments, the payload PAYLOAD may comprise data representative of at least one part of a coded image or video and film grain parameters determined according to any one of the embodiments described above.

Various implementations involve decoding. "Decoding", as used in this application, can encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application, for example, entropy decoding a sequence of binary symbols to reconstruct image or video data.

As further examples, in one embodiment "decoding" refers only to entropy decoding, in another embodiment "decoding" refers only to differential decoding, and in another embodiment "decoding" refers to a combination of entropy decoding and differential decoding, and in another embodiment "decoding" refers to the whole reconstructing picture process including entropy decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application, for example, determining re-sampling filter coefficients, re-sampling a decoded picture.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that the syntax elements as used herein, are descriptive terms. As such, they do not preclude the use of other syntax element names.

This disclosure has described various pieces of information, such as for example syntax, that can be transmitted or stored, for example. This information can be packaged or arranged in a variety of manners, including for example manners common in video standards such as putting the information into an SPS, a PPS, a NAL unit, a header (for example, a NAL unit header, picture header or a slice header), or an SEI message. Other manners are also available, including for example manners common for system level or application level standards such as putting the information into one or more of the following:

> a. SDP (session description protocol), a format for describing multimedia communication sessions for the purposes of session announcement and session invitation, for example as described in RFCs and used in conjunction with RTP (Real-time Transport Protocol) transmission.
> b. DASH MPD (Media Presentation Description) Descriptors, for example as used in DASH and transmitted over HTTP, a Descriptor is associated to a Representation or collection of Representations to provide additional characteristic to the content Representation.
> c. RTP header extensions, for example as used during RTP streaming.
> d. ISO Base Media File Format, for example as used in OMAF and using boxes which are object-oriented building blocks defined by a unique type identifier and length also known as 'atoms' in some specifications.
> e. HLS (HTTP live Streaming) manifest transmitted over HTTP. A manifest can be associated, for example, to a version or collection of versions of a content to provide characteristics of the version or collection of versions.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Some embodiments refer to rate distortion optimization. In particular, during the encoding process, the balance or trade-off between the rate and distortion is usually considered, often given the constraints of computational complexity. The rate distortion optimization is usually formulated as minimizing a rate distortion function, which is a weighted sum of the rate and of the distortion.

There are different approaches to solve the rate distortion optimization problem. For example, the approaches may be based on an extensive testing of all encoding options, including all considered modes or coding parameters values, with a complete evaluation of their coding cost and related distortion of the reconstructed signal after coding and decoding. Faster approaches may also be used, to save encoding complexity, in particular with computation of an approximated distortion based on the prediction or the prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of" for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. In this way, in an embodiment the same parameter is used at both the encoder side and the decoder side. Thus, for example, an encoder can transmit (explicit signaling) a particular parameter to the decoder so that the decoder can use the same particular parameter.

Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

A number of embodiments has been described above. Features of these embodiments can be provided alone or in any combination, across various claim categories and types.

## Claims

1. A method, comprising:

   encoding at least one image of a video,
   determining at least one film grain parameter of a frequency-based film grain model using at least one part of one or more encoding parameters of the at least one image.

2. An apparatus comprising one or more processors operable to:

   encode at least one image of a video,
   determine at least one film grain parameter of a frequency-based film grain model based on the encoding of the at least one image.

3. The method of claim 1 or the apparatus of claim 2, wherein the at least one film grain parameter of the frequency-based film grain model comprises at least one of: a low horizontal cut-off frequency, a high horizontal cut-off frequency, a low vertical cut-off frequency, a high vertical cut-off frequency, a variance of the film grain, a scaling factor value.

4. The method of claim 1 or the apparatus of claim 2, wherein determining, for the at least one image, at least one film grain parameter of a frequency-based film grain model using at least one part of the one or more encoding parameters of the at least one image comprises:

   selecting one or more blocks of the at least one image,
   assigning each one of the selected one or more blocks to an intensity interval obtained from a subdivision of an intensity range of the at least one image,
   determining a high horizontal cut-off frequency and a high vertical cut-off frequency for the intensity interval,
   determining a low horizontal cut-off frequency and a low vertical cut-off frequency for the intensity interval,
   determining a scaling factor,

   wherein at least one of assigning each one of the selected one or more blocks to an intensity interval obtained from a subdivision of an intensity range of the at least one image, determining a high horizontal cut-off frequency and a high vertical cut-off frequency for the intensity interval, determining a low horizontal cut-off frequency and a low vertical cut-off frequency for the intensity interval, or determining a scaling factor uses the at least one part of the one or more encoding parameters.

5. The method of claim 1 or the apparatus of claim 2, wherein determining, for the at least one image, at least one film grain parameter of a frequency-based film grain model using at least one part of the one or more encoding parameters of the at least one image comprises:

   subdividing an intensity range of the at least one image into a given number of intensity intervals,
   for each intensity interval, determining the at least one film grain parameter of the frequency-based film grain model, using one or more selected blocks that belong to the intensity interval.

6. The method or the apparatus of claim 5, wherein the intensity interval to which a given selected block belongs is determined using an average intensity determined for the given selected block based on at least one of reference samples used for predicting the given selected block or a transform coefficient at a top-left position of the given selected block after transform and before quantization.

7. The method or the apparatus of any one of claims 5 or 6, wherein determining the at least one film grain parameter of the frequency-based film grain model for an intensity interval comprises:
   determining an horizontal cut-off frequency and a vertical cut-off frequency of the frequency-based film grain model using an average of squared transformed matrix obtained for the one or more selected blocks that belong to the intensity interval.

8. The method or the apparatus of claim 7, wherein the squared transformed matrix is obtained for the one or more selected blocks that belong to the intensity interval using the transformed blocks obtained during encoding the at least one image.

9. The method or the apparatus of claim 8, wherein quantization when the horizontal cut-off frequency and the vertical cut-off frequency correspond to a high horizontal cut-off frequency and a high vertical cut-off frequency, the transformed blocks are obtained before quantization of the transformed blocks, or when the horizontal cut-off frequency and the vertical cut-off frequency correspond to a low horizontal cut-off frequency and a low vertical cut-off frequency, the transformed blocks are obtained after quantization of the transformed blocks.

10. The method or the apparatus of claim 9, wherein the squared transformed matrix is obtained for the one or more selected blocks that belong to the intensity interval using a transform applied on the one or more selected blocks of the at least one image before encoding when the horizontal cut-off frequency and the vertical cut-off frequency correspond to a high horizontal cut-off frequency and a high vertical cut-off frequency or on the one or more selected blocks of a reconstructed version of the at least one image after encoding when the horizontal cut-off frequency and the vertical cut-off frequency correspond to a low horizontal cut-off frequency and a low vertical cut-off frequency.

11. The method or the apparatus of any one of claims 7-10, wherein the horizontal cut-off frequency and the vertical cut-off frequency being a high horizontal cut-off frequency and a high vertical cut-off frequency, the high horizontal cut-off frequency is determined as a last column having a significant coefficient in the average of squared transformed matrix and the high vertical cut-off frequency is determined as a last line having a significant coefficient in the average of squared transformed matrix.

12. The method or the apparatus of any one of claims 7-10, wherein the horizontal cut-off frequency and the vertical cut-off frequency being a low horizontal cut-off frequency and a low vertical cut-off frequency, the low horizontal cut-off frequency and the low vertical cutoff frequency are determined based on a position of a given coefficient in squared transformed matrix.

13. The method or the apparatus of claim 12, wherein the given coefficient is a coefficient located just after a first coefficient for which a given percentage of energy of the coefficients of the squared transformed matrix is obtained by coefficients located before the first coefficient.

14. The method or the apparatus of claim 12, wherein the given coefficient is a last significant coefficient in the squared transformed.

15. The method or the apparatus of any one of claims 5-14, wherein determining the at least one film grain parameter of the frequency-based film grain model for an intensity interval comprises: determining a scaling factor using a subset of transformed coefficients obtained for the one or more selected blocks that belong to the intensity interval during encoding of the at least one image.

16. The method of claim 15, wherein the subset of transformed coefficients correspond to transformed coefficients whose spatial location in the transformed block is between a low horizontal cut-off frequency and a high horizontal cut-off frequency and between a a low vertical cut-off frequency and a high vertical cut-off frequency determined for the intensity interval.

17. A computer program product including instructions for causing one or more processors to carry out the method of any of claims 1 or 3-16.

18. A non-transitory computer readable medium storing executable program instructions to cause a computer executing the program instructions to perform the method of any of claims 1 or 3-16.

100A

110                          120

Processor                    Memory

115

## FIG. 1A

100B

105

RF

COMP        110          120                    160

USB     Processor     Memory          Display Interface

HDMI                                           170

115                      Audio Interface

                                               180

Communication                          Peripheral
Interface        — 150                 Interface

Communication Channel

190

## FIG. 1B

**FIG. 1C**

EP 4 611 367 A1

FIG. 2

300

| 330 | 335 | 340 | 350 |

Entropy Decoding → Partitioning → Inverse Quantization → Inverse Transform

355

Prediction Mode — 370

Intra Prediction

360

Motion Compensation — 375

In-loop Filters — 365 → Post-decoding Processing — 385

Motion Refinement — 372

Reference Picture Buffer — 380

**FIG. 3**

SPLIT_BT_VER    SPLIT_BT_HOR    SPLIT_TT_VER    SPLIT_TT_HOR

**FIG. 4**

Film grain model
parameterization

Film grain model
parameters

source
video

Denoising

denoised
video

Encoding

coded video bitstream
containing film grain
model parameters

FIG. 5

Film grain model parameters

coded video bitstream
containing film grain
model parameters

Decoding

decoded video

Film grain
synthesis

decoded video with
simulated film grain

FIG. 6

Film grain model parametrization

Denoised video ——→(−)——→ Noise estimation ——→ [ Noise analysis & parameter estimation ] ——→ Model parameters

Source video ——→ [ Edge & complex texture analysis ]

## FIG. 7

EP 4 611 367 A1

Horizontal cutoff frequency

Vertical cutoff frequency

Random Gaussian Noise

$N(0,\sigma^2)$

Null values

64

64

Inverse DCT ——→

Direct DCT ←——

Grain 64x64 to be added to the filtered frame in the spatial domain

## FIG. 8

FIG. 9

FIG. 10

EP 4 611 367 A1

QP32
without
FG

Uniform region without
FG from bitstream

Uniform region with FG
from original picture

Horizontal cutoff
frequency (LH)

vertical cutoff
frequency (LV)

Last_xy_sig

Cutof frequencies without grain

Horizontal cutoff (HH)
frequency

Vertical cutoff
frequency

Random Gaussian
Noise

$N(0,\sigma^2)$

(HV)

Null values

Cutoff frequencies with grain

LH    HH

LV

HV

Frequencies
analysis

Film Grain
parameters =
{Film Grain
Estimation,
FilmGrain Level}

FIG. 11

1200

Encoding one or more
images of the video

1201

Determining film grain
parameters based on the
encoding

1202

# FIG. 12

1300

Selecting one or more
blocks

1301

Assigning blocks to a
internsity interval

1302

Determining high cut-off
frequencies

1303

Determining low cut-off
frequencies

1304

Determining scaling factor

1305

# FIG. 13

FIG. 14

FIG. 15

FIG. 16

**FIG. 17**

**FIG. 18**

# EP 4 611 367 A1

Europäisches Patentamt
European Patent Office
Office européen des brevets

## EUROPEAN SEARCH REPORT

**Application Number**

EP 24 30 5315

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/275222 A1 (INTERDIGITAL VC HOLDINGS FRANCE SAS [FR]) 5 January 2023 (2023-01-05) | 1-6 | INV. H04N19/117 H04N19/176 H04N19/80 H04N19/85 |
| Y | * page 8; claims 10, 17, 18 * | 15,16 | |
| X | WO 2023/213775 A1 (INTERDIGITAL CE PATENT HOLDINGS SAS [FR]) 9 November 2023 (2023-11-09) * claim 1 * | 1,2,17,18 | |
| X | US 11 122 300 B2 (FRAUNHOFER GES FORSCHUNG [DE]) 14 September 2021 (2021-09-14) | 1,2,17,18 | |
| Y | * claims 2, 3; figures 2, 3 * | 15,16 | |
| A | GROIS (COMCAST) D ET AL: "AHG13: Proposed text: Film grain synthesis technology for video applications (CD draft)", 29. JVET MEETING; 20230111 - 20230120; TELECONFERENCE; (THE JOINT VIDEO EXPLORATION TEAM OF ISO/IEC JTC1/SC29/WG11 AND ITU-T SG.16 ), , no. JVET-AC0151 ; m61731 16 January 2023 (2023-01-16), XP030306756, Retrieved from the Internet: URL:https://jvet-experts.org/doc_end_user/documents/29_Teleconference/wg11/JVET-AC0151-v3.zip JVET-AC0151-v3.docx [retrieved on 2023-01-16] * the whole document * | 1-18 | **TECHNICAL FIELDS SEARCHED (IPC)** H04N |

The present search report has been drawn up for all claims

| Place of search | Date of completion of the search | Examiner |
|---|---|---|
| Munich | 22 July 2024 | Giuliani, Nicola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 24 30 5315

This annex lists the patent family members relating to the patent documents cited in  the above-mentioned European search report.
The members are as contained in the European Patent Office EDP file on
The European Patent Office is in no way liable for these particulars which are merely given for the purpose of information.

22-07-2024

| Patent document cited in search report | Publication date | Patent family member(s) | | Publication date |
|---|---|---|---|---|
| WO 2023275222 A1 | 05-01-2023 | CN | 117751575 A | 22-03-2024 |
| | | EP | 4364424 A1 | 08-05-2024 |
| | | WO | 2023275222 A1 | 05-01-2023 |
| WO 2023213775 A1 | 09-11-2023 | NONE | | |
| US 11122300 B2 | 14-09-2021 | EP | 3759917 A1 | 06-01-2021 |
| | | US | 2020389673 A1 | 10-12-2020 |
| | | WO | 2019166317 A1 | 06-09-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- ersatile Video Coding, Standard ITU-T H.266. *ISO/-IEC 23090-3*, 2020
- **D. GROIS** ; **Y.HE** ; **W. HUSAK** ; **P. DE LAGRANGE** ; **A. NORKIN** ; **M. RADOSAVLJEVIC** ; **A. TOURAPIS** ; **W. WANN**. JVET-AE2020-v2: Film grain synthesis technology for video applicatons (Draft 5). *31st eeting, Geneva, CH*, 11 July 2023
- **E. ALLEN** ; **S. TRIANTAPHILLIDOU**. The manual of photography. CRC Press, 2012
- **D. GROIS** ; **A. GILADI**. Perceptual quantization matrices for high dynamic range H.265/MPEG-HEVC video coding. *Proceedings SPIE 11137, Applications of Digital Image Processing XLII, 1113700*, February 2020
- **D. GROIS** ; **A. GILADI**. HVS-Based Perceptual Quantization Matrices for HDR HEVC Video Coding for Mobile Devices. *International Broadcasting Convention (IBC) 2020*, September 2020
- **P. DE LAGRANGE** ; **E. FRANÇOIS** ; **M. LE PENDU** ; **C. SALMON-LEGAGNEUR**. JVET AG0215-v1 AH-G9/AHG13: Region-dependent film grain characteristics. *33rd Meeting by Teleconference*, 17 January 2024
- **DABOV, KOSTADIN** ; **FOI, ALESSANDRO** ; **KATKOVNIK, VLADIMIR** ; **EGIAZARIAN, KAREN**. Image denoising by sparse 3D transform-domain collaborative filtering. *IEEE Transactions on Image Processing*, 2007
- **RALF SCHÄFER** ; **HEIKO SCHWARZ** ; **DETLEV MARPE** ; **THOMAS SCHIERL** ; **THOMAS WIEGAND**. MCTF and Scalability Extension of H. 264/A VC and its Application to Video Transmission, Storage, and Surveillance. *VCIP*, 2005